# EUROPEAN PATENT APPLICATION

(11) **EP 4 815 544 A1**
(43) Date of publication of application: **30.09.2026**
(21) Application number: 23959176.1
(22) Date of filing: 22.11.2023
(51) Int. Cl.: H04W 24/06

(54) **COMMUNICATION METHOD, DEVICE AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2023/133398
(87) International publication number: WO 2025/107202

(57) **Abstract**

The present disclosure relates to a communication method, a device and a storage medium. The method comprises: receiving first information sent by a network device, the first information comprising a configuration of a reference signal resource, and the reference signal resource being used for a terminal device to perform beam measurement; on the basis of the first information, performing beam measurement to obtain a beam group measurement result of at least one beam group; and sending second information to the network device on the basis of the beam group measurement result, the second information comprising information related to a first AI model, and the first AI model being a model for performing beam prediction. That is, the terminal device can perform beam measurement on the basis of the first information sent by the network device to obtain the beam group measurement result of the at least one beam group, and send the second information to the network device on the basis of the beam group measurement result, so that the network device can perform model reasoning, model performance monitoring or model training on the basis of the second information, thereby improving the system performance.

## Description

### FIELD

The present disclosure relates to the field of communication technologies, and more particularly to a communication method, a communication device and a storage medium.

### BACKGROUND

In a wireless communication system, beams of multiple transmission reception points (TRPs) need to serve a terminal at the same time in a multiple transmission reception point (MTRP) scenario. During beam measurement, an artificial intelligence (AI) model may be used to predict the beam corresponding to each TRP. The accuracy rate of beam prediction depends on the performance of the AI model.

### SUMMARY

Embodiments of the present disclosure provide a communication method, a communication device, and a storage medium.

According to a first aspect of embodiments of the present disclosure, a communication method is provided, which is executed by a terminal, and includes: receiving first information sent by a network device, where the first information includes configuration of a reference signal resource, and the reference signal resource is configured for the terminal to perform beam measurement; and obtaining a beam group measurement result of at least one beam group by performing the beam measurement according to the first information; and sending second information to the network device according to the beam group measurement result, where the second information includes information related to a first artificial intelligence (AI) model, and the first AI model is a model for performing beam prediction.

According to a second aspect of embodiments of the present disclosure, a communication method is provided, which is performed by a network device, and includes: sending first information to a terminal, where the first information includes configuration of a reference signal resource, and the reference signal resource is configured for the terminal to perform beam measurement; and receiving second information sent by the terminal according to a beam group measurement result of at least one beam group, where the beam group measurement result is obtained by the terminal performing the beam measurement according to the first information, the second information includes information related to a first artificial intelligence (AI) model, and the first AI model is a model for performing beam prediction.

According to a third aspect of embodiments of the present disclosure, a terminal is provided, which includes: a transceiver module is configured to receive first information sent by a network device, where the first information includes configuration of a reference signal resource, and the reference signal resource is configured for the terminal to perform beam measurement; a processing module configured to perform the beam measurement according to the first information to obtain a beam group measurement result of at least one beam group. The processing module is further configured to send second information to the network device according to the beam group measurement result, where the second information includes information related to a first artificial intelligence (AI) model, and the first AI model is a model for performing beam prediction.

According to a fourth aspect of embodiments of the present disclosure, a network device is provided, which includes: a transceiver module configured to send first information to a terminal, where the first information includes configuration of a reference signal resource, and the reference signal resource is configured for the terminal to perform beam measurement. The transceiver module is further configured to receive second information sent by the terminal according to a beam group measurement result of at least one beam group, where the beam group measurement result is obtained by the terminal performing the beam measurement according to the first information, the second information includes information related to a first artificial intelligence (AI) model, and the first AI model is a model for performing beam prediction.

According to a fifth aspect of embodiments of the present disclosure, a communication device is provided, which includes one or more processors. The communication device is configured to perform the method described in optional implementations of the first aspect or the second aspect.

According to a sixth aspect of embodiments of the present disclosure, a storage medium is provided, which stores instructions. When the instructions are executed on a communication device, the communication device is caused to perform the method described in optional implementations of the first aspect or the second aspect.

The technical solution provided by the embodiments of the present disclosure may include the following beneficial effects. The first information sent by the network device is received, the first information includes the configuration of the reference signal resource, and the reference signal resource is configured for the terminal to perform the beam measurement; the beam group measurement result of the at least one beam group is obtained by performing the beam measurement according to the first information; and the second information is sent to the network device according to the beam group measurement result, the second information includes the information related to the first AI model, and the first AI model is the model for performing the beam prediction. In other words, the terminal may perform the beam measurement according to the first information sent by the network device, obtain the beam group measurement result of the at least one beam group, and send the second information to the network device according to the beam group measurement result, so that the network device may perform model inference, model performance monitoring or model training according to the second information, thereby improving system performance.

It is to be understood that the foregoing general description and the following detailed description are illustrative and explanatory only, and are not restrictive of the present disclosure.

### BRIEF DESCRIPTION OF THE DRAWINGS

In order to more clearly illustrate the technical solution in the embodiments of the present disclosure, the drawings required for describing the embodiments are introduced below. The following drawings only show some embodiments of the present disclosure and do not impose specific limitations on the protection scope of the present disclosure.
FIG. 1 is a schematic architecture diagram of a communication system according to an embodiment of the present disclosure.
FIG. 2A is a schematic interaction diagram of a communication method according to an embodiment of the present disclosure.
FIG. 2B is a schematic interaction diagram of a communication method according to an embodiment of the present disclosure.
FIG. 2C is a schematic interaction diagram of a communication method according to an embodiment of the present disclosure.
FIG. 2D is a schematic interaction diagram of a communication method according to an embodiment of the present disclosure.
FIG. 3A is a flow chart of a communication method according to an embodiment of the present disclosure.
FIG. 3B is a flow chart of a communication method according to an embodiment of the present disclosure.
FIG. 3C is a flow chart of a communication method according to an embodiment of the present disclosure.
FIG. 3D is a flow chart of a communication method according to an embodiment of the present disclosure.
FIG. 3E is a flow chart of a communication method according to an embodiment of the present disclosure.
FIG. 4A is a flow chart of a communication method according to an embodiment of the present disclosure.
FIG. 4B is a flow chart of a communication method according to an embodiment of the present disclosure.
FIG. 4C is a flow chart of a communication method according to an embodiment of the present disclosure.
FIG. 4D is a flow chart of a communication method according to an embodiment of the present disclosure.
FIG. 4E is a flow chart of a communication method according to an embodiment of the present disclosure.
FIG. 5 is a schematic interaction diagram of a communication method according to an embodiment of the present disclosure.
FIG. 6A is a block diagram of a terminal according to an embodiment of the present disclosure.
FIG. 6B is a block diagram of a network device according to an embodiment of the present disclosure.
FIG. 7A is a block diagram of a communication device according to an embodiment of the present disclosure.
FIG. 7B is a block diagram of a chip according to an embodiment of the present disclosure.

### DETAILED DESCRIPTION

Embodiments of the present disclosure provide a communication method, a communication device, and a storage medium.

In a first aspect, embodiments of the present disclosure provide a communication method, which is executed by a terminal, and includes: receiving first information sent by a network device, where the first information includes configuration of a reference signal resource, and the reference signal resource is configured for the terminal to perform beam measurement; obtaining a beam group measurement result of at least one beam group by performing the beam measurement according to the first information; and sending second information to the network device according to the beam group measurement result, where the second information includes information related to a first artificial intelligence (AI) model, and the first AI model is a model for performing beam prediction.

In the above embodiments, the terminal may perform the beam measurement based on the first information sent by the network device, obtain the beam group measurement result of the at least one beam group, and send the second information to the network device based on the beam group measurement result. In this way, the network device may perform model inference, model performance monitoring or model training based on the second information, thereby improving system performance.

In combination with some embodiments of the first aspect, in some embodiments, the at least beam group each includes a first beam and a second beam, and obtaining the beam group measurement result of the at least one beam group by performing the beam measurement according to the first information includes: for each beam group, obtaining a first beam measurement result of the first beam and a second beam measurement result of the second beam by performing the beam measurement according to the first information, and determining the beam group measurement result of the beam group according to the first beam measurement result and the second beam measurement result.

In the above embodiments, the terminal may determine the beam group measurement result of each beam group according to the beam measurement results of two beams in the beam group.

In combination with some embodiments of the first aspect, in some embodiments, determining the beam group measurement result of the beam group according to the first beam measurement result and the second beam measurement result includes at least one of: taking an average of the first beam measurement result and the second beam measurement result as the beam group measurement result; taking a weighted average of the first beam measurement result and the second beam measurement result as the beam group measurement result; or taking a sum of the first measurement result, the second measurement result, and a product of the first measurement result and the second measurement result as the beam group measurement result.

In the above embodiments, the beam group measurement result may be calculated by various calculation methods, thereby making the determination method of the beam group measurement result more flexible.

In combination with some embodiments of the first aspect, in some embodiments, the first information includes at least one of: a first reference signal resource set, where a reference signal resource in the first reference signal resource set corresponds to a beam to be measured; a second reference signal resource set, where a reference signal resource in the second reference signal resource set corresponds to a beam to be predicted; a third reference signal resource set, where the third reference signal resource set includes a resource for interference measurement; or a relationship between the first reference signal resource set and the second reference signal resource set.

In the above embodiments, the configuration of the reference signal resource for the beam measurement is provided, so that the terminal may perform the beam measurement.

In combination with some embodiments of the first aspect, in some embodiments, the first AI model is a model for performing spatial-domain beam prediction, and the relationship between the first reference signal resource set and the second reference signal resource set includes at least one of: the first reference signal resource set being a subset of the second reference signal resource set; or the beam corresponding to the first reference signal resource set being a wide beam, the beam corresponding to the second reference signal resource set being a narrow beam, and a beam coverage range corresponding to the first reference signal resource set being the same as a beam coverage range corresponding to the second reference signal resource set.

In the above embodiments, the relationship between the beam to be measured and the beam to be predicted corresponding to the model for the spatial-domain beam prediction is provided, so that the terminal may accurately perform the beam measurement.

In combination with some embodiments of the first aspect, in some embodiments, the first AI model is a model for performing time-domain beam prediction, and the relationship between the first reference signal resource set and the second reference signal resource set includes at least one of: the first reference signal resource set being a subset of the second reference signal resource set; the first reference signal resource set being the same as the second reference signal resource set; or the beam corresponding to the first reference signal resource set being a wide beam, the beam corresponding to the second reference signal resource set being a narrow beam, and a beam coverage range corresponding to the first reference signal resource set being the same as a beam coverage range corresponding to the second reference signal resource set.

In the above embodiments, the relationship between the beam to be measured and the beam to be predicted corresponding to the model for the time-domain beam prediction is provided, so that the terminal may accurately perform the beam measurement.

In combination with some embodiments of the first aspect, in some embodiments, the first reference signal resource set includes a plurality of fourth reference signal resource sets, and different fourth reference signal resource sets of the plurality of fourth reference signal resource sets correspond to different transmission reception points (TRPs); and the second reference signal resource set includes a plurality of fifth reference signal resource sets, and different fifth reference signal resource sets of the plurality of fifth reference signal resource sets correspond to different TRPs.

In the above embodiments, different TRPs may be provided with different reference signal resource sets, so that the terminal may perform the measurement and report the measurement result in a group-based manner.

In combination with some embodiments of the first aspect, in some embodiments, the first AI model is a model for performing spatial-domain beam prediction, and a relationship between the fourth reference signal resource set and the fifth reference signal resource set includes at least one of: the fourth reference signal resource set being a subset of the fifth reference signal resource set; or a beam corresponding to the fourth reference signal resource set being a wide beam, a beam corresponding to the fifth reference signal resource set being a narrow beam, and a beam coverage range corresponding to the fourth reference signal resource set being the same as a beam coverage range corresponding to the fifth reference signal resource set.

In the above embodiments, the terminal may perform the beam measurement and reporting based on the reference signal resource of each TRP, thereby improving the communication performance of the terminal based on multi-beam transmission.

In combination with some embodiments of the first aspect, in some embodiments, the first AI model is a model for performing time-domain beam prediction, and a relationship between the fourth reference signal resource set and the fifth reference signal resource set includes at least one of: the fourth reference signal resource set being a subset of the fifth reference signal resource set; the fourth reference signal resource set being the same as the fifth reference signal resource set; or a beam corresponding to the fourth reference signal resource set being a wide beam, a beam corresponding to the fifth reference signal resource set being a narrow beam, and a beam coverage range corresponding to the fourth reference signal resource set being the same as a beam coverage range corresponding to the fifth reference signal resource set.

In the above embodiments, the terminal may perform the beam measurement and reporting based on the reference signal resource of each TRP, thereby improving the communication performance of the terminal based on multi-beam transmission.

In combination with some embodiments of the first aspect, in some embodiments, the second information includes at least one of: model training data; model performance monitoring data; model input data; or model output data.

In the above embodiments, the terminal may send various types of data to the network device, so that the network device may monitor the performance of the first AI model, or perform inference through the first AI model, or train the first AI model.

In combination with some embodiments of the first aspect, in some embodiments, the model training data includes the model input data and a beam measurement result of the beam to be predicted.

In the above embodiments, the network device may train the first AI model through the model training data.

In combination with some embodiments of the first aspect, in some embodiments, the model performance monitoring data includes at least one of: beam information of K beam groups; a performance value of the first AI model; first data, where the first data includes at least one of: model input data of the first AI model, model output data of the first AI model, or measurement data corresponding to the model output data, where the model output data is data output by the first AI model according to the model input data; a specified event, where the specified event is triggered based on a comparison result between the performance value of the first AI model and a first threshold value or a first offset value; or first operation information, where the first operation information indicates that a management operation is performed on the first AI model, where the management operation includes any one of: activating the first AI model, deactivating the first AI model, switching the first AI model, and not using an AI model.

In the above embodiments, the network device may monitor the performance of the first AI model through the model performance monitoring data, thereby improving the performance of the first AI model.

In combination with some embodiments of the first aspect, in some embodiments, the method further includes: determining the K beam groups from the at least one beam group according to the beam group measurement result.

In the above embodiments, the terminal may select the K beam groups according to the beam group measurement result obtained through measurement, and send the beam information of the K beam groups to the network device, thereby reducing the amount of uplink transmission data.

In combination with some embodiments of the first aspect, in some embodiments, the K beam groups are best K beam groups, and determining the K beam groups from the at least one beam group according to the beam group measurement result includes: taking beam groups corresponding to best K beam group measurement results as the best K beam groups, where the best K beam group measurement results include first K beam group measurement results of at least one instance of the beam group measurement result arranged in a descending order.

In the above embodiments, the terminal may select the best K beam groups and send the beam information of the best K beam groups to the network device, so that the performance of the first AI model determined by the network device is more accurate.

In combination with some embodiments of the first aspect, in some embodiments, the beam information includes at least one of: an identifier of a reference signal resource corresponding to each beam in each best beam group; or a beam quality corresponding to the identifier of the reference signal resource.

In the above embodiments, the beam information may be the identifier of the reference signal resource, or may be the beam quality corresponding to the identifier, thereby improving the flexibility of the beam information.

In combination with some embodiments of the first aspect, in some embodiments, the performance value includes at least one of: a beam group prediction accuracy rate, where the beam group prediction accuracy rate is an accuracy rate of at least one predicted beam group including an actual best beam group; a beam group quality difference, where the beam group quality difference is a difference between a measured beam quality of a first beam group and a measured beam quality of a second beam group, where the first beam group is a beam group with a strongest predicted beam quality, and the second beam group is a beam group with a strongest measured beam quality; or a predicted beam group quality difference, where the predicted beam group quality difference is a difference between a predicted beam quality of the first beam group and a measured beam quality of the first beam group.

In the above embodiments, the network device may monitor the performance of the first AI model through one or more of the performance values, thereby improving the flexibility and accuracy of performance monitoring.

In combination with some embodiments of the first aspect, in some embodiments, the specified event includes at least one of: a first event, a second event, a third event, a fourth event, a fifth event or a sixth event; and sending the second information to the network device according to the beam group measurement result includes at least one of: determining that the beam group prediction accuracy rate is less than a first accuracy threshold according to the beam group measurement result, and sending the first event to the network device; determining that the beam group prediction accuracy rate is greater than a second accuracy threshold according to the beam group measurement result, and sending the second event to the network device; determining that the beam group quality difference is less than a first difference threshold according to the beam group measurement result, and sending the third event to the network device; determining that the beam group quality difference is greater than a second difference threshold according to the beam group measurement result, and sending the fourth event to the network device; determining that the predicted beam group quality difference is less than a third difference threshold according to the beam group measurement result, and sending the fifth event to the network device; or determining that the predicted beam group quality difference is greater than a fourth difference threshold according to the beam group measurement result, and sending the sixth event to the network device.

In the above embodiments, the terminal may judge the prediction result according to the beam group measurement result, and trigger different events based on the judgment result, so that the network device may determine the performance of the first AI model.

In combination with some embodiments of the first aspect, in some embodiments, sending the second information to the network device according to the beam group measurement result includes: determining the model output data and the measurement data corresponding to the model output data according to the beam group measurement result; determining the first operation information according to the model output data and the measurement data corresponding to the model output data; and sending the first operation information to the network device.

In the above embodiments, the terminal may determine the decision on the first AI model according to the model output data and the measurement data corresponding to the model output data, and inform the network device.

In combination with some embodiments of the first aspect, in some embodiments, determining the first operation information according to the model output data and the measurement data corresponding to the model output data includes: the first AI model being in an inactive state, determining that a performance of the first AI model meets a performance requirement according to the model output data and the measurement data corresponding to the model output data, and determining that the first operation information is activating the first AI model; or the first AI model being in an active state, determining that a performance of the first AI model does not meet a performance requirement according to the model output data and the measurement data corresponding to the model output data, and determining that the first operation information is deactivating the first AI model.

In the above embodiments, the terminal may determine the management operation on the AI model according to the current state of the first AI model.

In combination with some embodiments of the first aspect, in some embodiments, the first AI model is a model for performing spatial-domain beam prediction, and the model input data includes at least one of: beam qualities of N beams corresponding to the first reference signal resource set, where the beam quality includes a layer 1-reference signal receiving power (L1-RSRP) or a layer 1-signal to interference plus noise ratio (L1-SINR), and N is a positive integer; identifiers of reference signal resources corresponding to N beams corresponding to the first reference signal resource set; or first indication information, where the first indication information indicates that beams contained in at least one group in group-based beam information output by the first AI model are two beams able to be simultaneously received and/or simultaneously sent by the terminal.

In the above embodiments, the model input data may include multiple different types of data, so as to monitor the performance of the first AI model through different data, or make more predictions through the first AI model.

In combination with some embodiments of the first aspect, in some embodiments, the first AI model is a model for performing spatial-domain beam prediction, and the model output data includes at least one of: at least one group; identifiers of two reference signal resources corresponding to each group, where the reference signal resource is the reference signal resource in the second reference signal resource set; a beam quality corresponding to the identifier of each reference signal resource; at least one third beam; an identifier of a reference signal resource corresponding to each third beam, where the reference signal resource is the reference signal resource in the second reference signal resource set; a beam quality corresponding to each third beam; or second indication information, where the second indication information indicates that beams contained in at least one group in group-based beam information output by the first AI model are two beams able to be simultaneously received and/or simultaneously sent by the terminal.

In the above embodiments, the model output data may include multiple different types of data, so as to monitor the performance of the first AI model or train the first AI model through different data.

In combination with some embodiments of the first aspect, in some embodiments, the first AI model is a model for performing time-domain beam prediction, and the model input data includes at least one of: at least one historical time; beam qualities of N beams corresponding to the first reference signal resource set corresponding to each historical time, where the beam quality includes an L1-RSRP or an L1-SINR, and N is a positive integer; identifiers of reference signal resources corresponding to N beams corresponding to the first reference signal resource set corresponding to each historical time; or third indication information, where the third indication information indicates that beams contained in at least one group in group-based beam information output by the first AI model are two beams able to be simultaneously received and/or simultaneously sent by the terminal.

In the above embodiments, the model input data may include multiple different types of data, so as to monitor the performance of the first AI model through different data, or make more predictions through the first AI model.

In combination with some embodiments of the first aspect, in some embodiments, the first AI model is a model for performing time-domain beam prediction, and the model output data includes at least one of: at least one future time, where the at least one future time each is a time corresponding to a beam predicted by the first AI model; at least one group corresponding to each future time; identifiers of two reference signal resources corresponding to each group corresponding to each future time, where the reference signal resource is the reference signal resource in the second reference signal resource set; a beam quality corresponding to the identifier of each reference signal resource corresponding to each future time; at least one fourth beam corresponding to each future time; an identifier of a reference signal resource corresponding to each fourth beam corresponding to each future time, where the reference signal resource is the reference signal resource in the second reference signal resource set; a beam quality corresponding to each fourth beam corresponding to each future time; or fourth indication information, where the fourth indication information indicates that beams contained in at least one group corresponding to at least one future time in group-based beam information output by the first AI model are two beams able to be simultaneously received and/or simultaneously sent by the terminal.

In the above embodiments, the model output data may include multiple different types of data, so as to monitor the performance of the first AI model or train the first AI model through different data.

In a second aspect, embodiments of the present disclosure provide a communication method, which is performed by a network device, and includes: sending first information to a terminal, where the first information includes configuration of a reference signal resource, and the reference signal resource is configured for the terminal to perform beam measurement; and receiving second information sent by the terminal according to a beam group measurement result of at least one beam group, where the beam group measurement result is obtained by the terminal performing the beam measurement according to the first information, the second information includes information related to a first artificial intelligence (AI) model, and the first AI model is a model for performing beam prediction.

In combination with some embodiments of the second aspect, in some embodiments, the at least one beam group each includes a first beam and a second beam, and the beam group measurement result is determined in the following manner: for each beam group, obtaining a first beam measurement result of the first beam and a second beam measurement result of the second beam by performing the beam measurement according to the first information, and determining the beam group measurement result of the beam group according to the first beam measurement result and the second beam measurement result.

In combination with some embodiments of the second aspect, in some embodiments, determining the beam group measurement result of the beam group according to the first beam measurement result and the second beam measurement result includes at least one of: taking an average of the first beam measurement result and the second beam measurement result as the beam group measurement result; taking a weighted average of the first beam measurement result and the second beam measurement result as the beam group measurement result; or taking a sum of the first measurement result, the second measurement result, and a product of the first measurement result and the second measurement result as the beam group measurement result.

In combination with some embodiments of the first aspect, in some embodiments, the first information includes at least one of: a first reference signal resource set, where a reference signal resource in the first reference signal resource set corresponds to a beam to be measured; a second reference signal resource set, where a reference signal resource in the second reference signal resource set corresponds to a beam to be predicted; a third reference signal resource set, where the third reference signal resource set includes a resource for interference measurement; or a relationship between the first reference signal resource set and the second reference signal resource set.

In combination with some embodiments of the first aspect, in some embodiments, the first AI model is a model for performing spatial-domain beam prediction, and the relationship between the first reference signal resource set and the second reference signal resource set includes at least one of: the first reference signal resource set being a subset of the second reference signal resource set; or the beam corresponding to the first reference signal resource set being a wide beam, the beam corresponding to the second reference signal resource set being a narrow beam, and a beam coverage range corresponding to the first reference signal resource set being the same as a beam coverage range corresponding to the second reference signal resource set.

In combination with some embodiments of the second aspect, in some embodiments, the first AI model is a model for performing time-domain beam prediction, and the relationship between the first reference signal resource set and the second reference signal resource set includes at least one of: the first reference signal resource set being a subset of the second reference signal resource set; the first reference signal resource set being the same as the second reference signal resource set; or the beam corresponding to the first reference signal resource set being a wide beam, the beam corresponding to the second reference signal resource set being a narrow beam, and a beam coverage range corresponding to the first reference signal resource set being the same as a beam coverage range corresponding to the second reference signal resource set.

In combination with some embodiments of the second aspect, in some embodiments, the first reference signal resource set includes a plurality of fourth reference signal resource sets, and different fourth reference signal resource sets of the plurality of fourth reference signal resource sets correspond to different transmission reception points (TRPs); and the second reference signal resource set includes a plurality of fifth reference signal resource sets, and different fifth reference signal resource sets of the plurality of fifth reference signal resource sets correspond to different TRPs.

In combination with some embodiments of the second aspect, in some embodiments, the first AI model is a model for performing spatial-domain beam prediction, and a relationship between the fourth reference signal resource set and the fifth reference signal resource set includes at least one of: the fourth reference signal resource set being a subset of the fifth reference signal resource set; or a beam corresponding to the fourth reference signal resource set being a wide beam, a beam corresponding to the fifth reference signal resource set being a narrow beam, and a beam coverage range corresponding to the fourth reference signal resource set being the same as a beam coverage range corresponding to the fifth reference signal resource set.

In combination with some embodiments of the second aspect, in some embodiments, the first AI model is a model for performing time-domain beam prediction, and a relationship between the fourth reference signal resource set and the fifth reference signal resource set includes at least one of: the fourth reference signal resource set being a subset of the fifth reference signal resource set; the fourth reference signal resource set being the same as the fifth reference signal resource set; or a beam corresponding to the fourth reference signal resource set being a wide beam, a beam corresponding to the fifth reference signal resource set being a narrow beam, and a beam coverage range corresponding to the fourth reference signal resource set being the same as a beam coverage range corresponding to the fifth reference signal resource set.

In combination with some embodiments of the second aspect, in some embodiments, the second information includes at least one of: model training data; model performance monitoring data; model input data; or model output data.

In combination with some embodiments of the second aspect, in some embodiments, the model training data includes the model input data and a beam measurement result of the beam to be predicted.

In combination with some embodiments of the second aspect, in some embodiments, the model performance monitoring data includes at least one of: beam information of K beam groups; a performance value of the first AI model; first data, where the first data includes at least one of: model input data of the first AI model, model output data of the first AI model, or measurement data corresponding to the model output data, where the model output data is data output by the first AI model according to the model input data; a specified event, where the specified event is triggered based on a comparison result between the performance value of the first AI model and a first threshold value or a first offset value; or first operation information, where the first operation information indicates that a management operation is performed on the first AI model, where the management operation includes any one of: activating the first AI model, deactivating the first AI model, switching the first AI model, and not using an AI model.

In combination with some embodiments of the second aspect, in some embodiments, the K beam groups are best K beam groups, the best K beam groups are beam groups corresponding to best K beam group measurement results, and the best K beam group measurement results include first K beam group measurement results of at least one instance of the beam group measurement result arranged in a descending order.

In combination with some embodiments of the second aspect, in some embodiments, the beam information includes at least one of: an identifier of a reference signal resource corresponding to each beam in each best beam group; or a beam quality corresponding to the identifier of the reference signal resource.

In combination with some embodiments of the second aspect, in some embodiments, the performance value includes at least one of: a beam group prediction accuracy rate, where the beam group prediction accuracy rate is an accuracy rate of at least one predicted beam group including an actual best beam group; a beam group quality difference, where the beam group quality difference is a difference between a measured beam quality of a first beam group and a measured beam quality of a second beam group, where the first beam group is a beam group with a strongest predicted beam quality, and the second beam group is a beam group with a strongest measured beam quality; or a predicted beam group quality difference, where the predicted beam group quality difference is a difference between a predicted beam quality of the first beam group and a measured beam quality of the first beam group.

In combination with some embodiments of the second aspect, in some embodiments, the specified event includes at least one of: a first event, a second event, a third event, a fourth event, a fifth event or a sixth event; and receiving the second information sent by the terminal according to the beam group measurement result of the at least one beam group includes at least one of: receiving the first event sent by the terminal, where the first event is triggered in a case that the terminal determines that the beam group prediction accuracy rate is less than a first accuracy threshold according to the beam group measurement result; receiving the second event sent by the terminal, where the second event is triggered in a case that the terminal determines that the beam group prediction accuracy rate is greater than a second accuracy threshold according to the beam group measurement result; receiving the third event sent by the terminal, where the third event is triggered in a case that the terminal determines that the beam group quality difference is less than a first difference threshold according to the beam group measurement result; receiving the fourth event sent by the terminal, where the fourth event is triggered in a case that the terminal determines that the beam group quality difference is greater than a second difference threshold according to the beam group measurement result; receiving the fifth event sent by the terminal, where the fifth event is triggered in a case that the terminal determines that the predicted beam group quality difference is less than a third difference threshold according to the beam group measurement result; or receiving the sixth event sent by the terminal, where the sixth event is triggered in a case that the terminal determines that the predicted beam group quality difference is greater than a fourth difference threshold according to the beam group measurement result.

In combination with some embodiments of the second aspect, in some embodiments, the first operation information is determined by the terminal according to the model output data and the measurement data corresponding to the model output data.

In combination with some embodiments of the second aspect, in some embodiments, the first operation information includes activating the first AI model or deactivating the first AI model.

In combination with some embodiments of the second aspect, in some embodiments, the first AI model is a model for performing spatial-domain beam prediction, and the model input data includes at least one of: beam qualities of N beams corresponding to the first reference signal resource set, where the beam quality includes a layer 1-reference signal receiving power (L1-RSRP) or a layer 1-signal to interference plus noise ratio (L1-SINR), and N is a positive integer; identifiers of reference signal resources corresponding to N beams corresponding to the first reference signal resource set; or first indication information, where the first indication information indicates that beams contained in at least one group in group-based beam information output by the first AI model are two beams able to be simultaneously received and/or simultaneously sent by the terminal.

In combination with some embodiments of the second aspect, in some embodiments, the first AI model is a model for performing spatial-domain beam prediction, and the model output data includes at least one of: at least one group; identifiers of two reference signal resources corresponding to each group, where the reference signal resource is the reference signal resource in the second reference signal resource set; a beam quality corresponding to the identifier of each reference signal resource; at least one third beam; an identifier of a reference signal resource corresponding to each third beam, where the reference signal resource is the reference signal resource in the second reference signal resource set; a beam quality corresponding to each third beam; or second indication information, where the second indication information indicates that beams contained in at least one group in group-based beam information output by the first AI model are two beams able to be simultaneously received and/or simultaneously sent by the terminal.

In combination with some embodiments of the second aspect, in some embodiments, the first AI model is a model for performing time-domain beam prediction, and the model input data includes at least one of: at least one historical time; beam qualities of N beams corresponding to the first reference signal resource set corresponding to each historical time, where the beam quality includes an L1-RSRP or an L1-SINR, and N is a positive integer; identifiers of reference signal resources corresponding to N beams corresponding to the first reference signal resource set corresponding to each historical time; or third indication information, where the third indication information indicates that beams contained in at least one group in group-based beam information output by the first AI model are two beams able to be simultaneously received and/or simultaneously sent by the terminal.

In combination with some embodiments of the second aspect, in some embodiments, the first AI model is a model for performing time-domain beam prediction, and the model output data includes at least one of: at least one future time, where the at least one future time each is a time corresponding to a beam predicted by the first AI model; at least one group corresponding to each future time; identifiers of two reference signal resources corresponding to each group corresponding to each future time, where the reference signal resource is the reference signal resource in the second reference signal resource set; a beam quality corresponding to the identifier of each reference signal resource corresponding to each future time; at least one fourth beam corresponding to each future time; an identifier of a reference signal resource corresponding to each fourth beam corresponding to each future time, where the reference signal resource is the reference signal resource in the second reference signal resource set; a beam quality corresponding to each fourth beam corresponding to each future time; or fourth indication information, where the fourth indication information indicates that beams contained in at least one group corresponding to at least one future time in group-based beam information output by the first AI model are two beams able to be simultaneously received and/or simultaneously sent by the terminal.

In a third aspect, embodiments of the present disclosure provide a communication method, which includes: sending by a network device first information to a terminal, where the first information includes configuration of a reference signal resource, and the reference signal resource is configured for the terminal to perform beam measurement; performing by the terminal the beam measurement according to the first information to obtain a beam group measurement result of at least one beam group; and sending by the terminal second information to the network device according to the beam group measurement result, where the second information includes information related to a first artificial intelligence (AI) model, and the first AI model is a model for performing beam prediction.

In a fourth aspect, embodiments of the present disclosure provide a terminal, which may include at least one of a transceiver module or a processing module, where the terminal may be configured to perform the optional implementations of the first aspect.

In a fifth aspect, embodiments of the present disclosure provide a network device, which may include at least one of a transceiver module or a processing module, where the network device may be configured to perform the optional implementations of the second aspect.

In a sixth aspect, embodiments of the present disclosure provide a terminal, which may include one or more processors, where the terminal may be configured to perform the optional implementations of the first aspect.

In a seventh aspect, embodiments of the present disclosure provide a network device, which may include one or more processors, where the network device may be configured to perform the optional implementations of the second aspect.

In an eighth aspect, embodiments of the present disclosure provide a communication device, which may include one or more processors, where the communication device may be configured to perform the optional implementations of the first aspect or the second aspect.

In a ninth aspect, embodiments of the present disclosure provide a communication system, which may include a terminal and a network device, where the terminal is configured to perform the methods according to the optional implementations of the first aspect, and the network device is configured to perform the methods according to the optional implementations of the second aspect.

In a tenth aspect, embodiments of the present disclosure provide a storage medium, which stores instructions. When the instructions are executed on a communication device, the communication device is caused to perform the methods according to the optional implementations of the first aspect or the second aspect.

In an eleventh aspect, embodiments of the present disclosure provide a program product. When the program product is executed by a communication device, the communication device is caused to perform the methods according to the optional implementations of the first aspect or the second aspect.

In a twelfth aspect, embodiments of the present disclosure provide a computer program, which, when executed on a computer, causes the computer to perform the methods according to the optional implementations of the first aspect or the second aspect.

In a thirteenth aspect, embodiments of the present disclosure provide a chip or a chip system. The chip or chip system includes a processing circuit configured to perform the methods according to the optional implementations of the first aspect or the second aspect.

It may be understood that the above terminal, network device, communication device, communication system, storage medium, program product, computer program, chip or chip system may be used to perform the methods provided in the embodiments of the present disclosure. Therefore, for the beneficial effects that may be achieved by them, reference may be made to the beneficial effects of the corresponding methods, which are not repeated here.

The embodiments of the present disclosure provide a communication method, a communication device, and a storage medium. In some embodiments, the terms such as communication method, information transmission method, information processing method, etc. may be used interchangeably; the terms such as communication device, information processing device, information transmission device, communication apparatus, etc. may be used interchangeably; and the terms such as communication system, information processing system, etc. may be used interchangeably.

The embodiments of the present disclosure are not exhaustive, but are only illustrative of some embodiments, and are not intended to be a specific limitation on the scope of protection of the present disclosure. In the absence of contradiction, each step in a certain embodiment may be implemented as an independent embodiment, and the steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, the embodiments may be arbitrarily combined, for example, some or all of the steps of different embodiments may be arbitrarily combined, and a certain embodiment may be arbitrarily combined with the optional implementations of other embodiments.

In each embodiment of the present disclosure, unless otherwise specified or there is a logical conflict, the terms and/or descriptions between the embodiments are consistent and may be referenced to each other, and the technical features in different embodiments may be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforesaid", "this", etc., may mean "one and only one", or "one or more", "at least one", etc. For example, when using articles such as "a", "an", "the" in English in translation, the noun after the article may be understood as a singular expression or a plural expression.

In some embodiments, "a plurality" refers to two or more.

In some embodiments, the terms "at least one", "one or more", "a plurality of", "multiple" and the like may be used interchangeably.

In some embodiments, the recording manners of "at least one of A and B", "A and/or B", "A in a case, B in another case", "A in response to a case, B in response to another case", etc., may include the following technical solutions according to the situation: in some embodiments, A (A is executed independently of B); in some embodiments, B (B is executed independently of A); in some embodiments, selection is made between A and B for execution (A and B are selectively executed); in some embodiments, A and B (both A and B are executed). When there are more branches such as A, B, C, etc., the same applies.

In some embodiments, the recording manner of "A or B" may include the following technical solutions according to the situation: in some embodiments, A (A is executed independently of B); in some embodiments, B (B is executed independently of A); in some embodiments, selection is made between A and B for execution (A and B are selectively executed). When there are more branches such as A, B, C, etc., the same applies.

The prefixes such as "first" and "second" in the embodiments of the present disclosure are only used to distinguish different description objects, and do not constitute restrictions on the position, order, priority, quantity or content of the description objects. The statement of the description object refers to the description in the context of the claims or embodiments, and should not constitute unnecessary restrictions due to the use of prefixes. For example, in a case that the description object is a "field", the ordinal numbers before the "field" in the "first field" and the "second field" do not limit the position or order between the "fields", and the "first" and "second" do not limit whether the "fields" they modify are in the same message, nor do they limit the order of the "first field" and the "second field". For another example, in a case that the description object is a "level", the ordinal numbers before the "level" in the "first level" and the "second level" do not limit the priority between the "levels". For another example, the number of description objects is not limited by the ordinal number, and may be one or more. Taking the "first device" as an example, the number of "devices" may be one or more. In addition, the objects modified by different prefixes may be the same or different. For example, in a case that the description object is "device", the "first device" and the "second device" may be the same device or different devices, and their types may be the same or different. For another example, in a case that the description object is "information", the "first information" and the "second information" may be the same information or different information, and their contents may be the same or different.

In some embodiments, "including A", "comprising A", "indicating A", and "carrying A" may be interpreted as directly carrying A or indirectly indicating A.

In some embodiments, terms such as "in response to...", "in response to determining...", "in a case that...", "while...", "when...", "if...", etc. may be used interchangeably.

In some embodiments, terms such as "greater than", "greater than or equal to", "not less than", "more than", "more than or equal to", "not less than", "higher than", "higher than or equal to", "not lower than", and "above" may be used interchangeably, and terms such as "less than", "less than or equal to", "not greater than", "less than", "less than or equal to", "no more than", "lower than", "lower than or equal to", "not higher than", and "below" may be used interchangeably.

In some embodiments, devices, etc. may be interpreted as physical or virtual, and their names are not limited to the names recorded in the embodiments. Terms such as "apparatus", "equipment", "device", "circuit", "network element", "node", "function", "unit", "section", "system", "network", "chip", "chip system", "entity", and "subject" may be used interchangeably.

In some embodiments, "network" may be interpreted as devices included in the network (e.g., access network device, core network device, etc.).

In some embodiments, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part" and the like may be used interchangeably.

In some embodiments, the terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal', "handset", "user agent", "mobile client", "client" and the like may be used interchangeably.

In some embodiments, the access network device, the core network device, or the network device may be replaced with a terminal. For example, the embodiments of the present disclosure may also be applied to a structure which replaces the communication between the access network device, core network device, or network device and the terminal with the communication between a plurality of terminals (for example, device-to-device (D2D), vehicle-to-everything (V2X), etc.). In this case, the terminal may have all or part of the functions of the access network device. In addition, terms such as "uplink" and "downlink" may also be replaced by terms corresponding to the communication between the terminals (for example, "side"). For example, uplink channel, downlink channel, etc. may be replaced by side channel, and uplink, downlink, etc. may be replaced by sidelink.

In some embodiments, the terminal may be replaced by the access network device, the core network device, or the network device. In this case, the access network device, the core network device, or the network device may have all or part of the functions of the terminal.

In some embodiments, obtaining data, information, etc., may comply with the laws and regulations of the country where the obtainment takes place.

In some embodiments, data, information, etc., may be obtained with a user's consent.

In addition, each element, each row, or each column in tables of the embodiments of the present disclosure may be implemented as an independent embodiment, and any combination of any elements, any rows, or any columns may also be implemented as an independent embodiment.

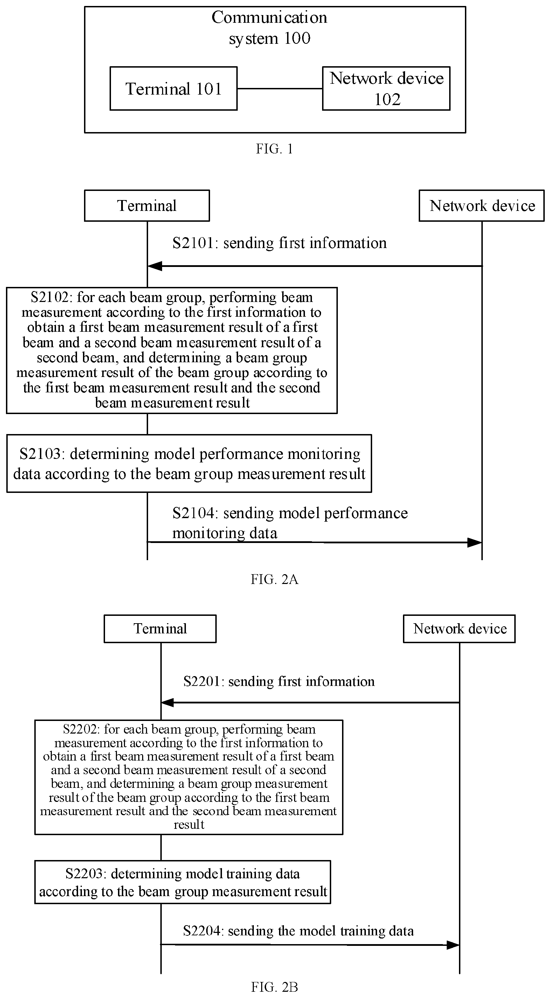

FIG. 1 is a schematic architecture diagram of a communication system according to an embodiment of the present disclosure. As shown in FIG. 1, a communication system 100 may include a terminal 101 and a network device 102.

In some embodiments, the terminal 101 may include at least one of a mobile phone, a wearable device, an Internet of Things device, a vehicle with a communication function, a smart vehicle, a tablet computer (Pad), a computer with wireless transmitting and receiving functions, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, and a wireless terminal in a smart home, but is not limited to this.

In some embodiments, the network device 102 may include at least one of an access network device or a core network device.

In some embodiments, the access network device may be a node or device that accesses a terminal to a wireless network. The access network device may include at least one of an evolved NodeB (eNB) in a 5G communication system, a next generation evolved NodeB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and an access node in a Wi-Fi system, but is not limited to this.

In some embodiments, the technical solution of the present disclosure may be applied to an Open RAN architecture. In this case, interfaces between the access network devices or within the access network devices involved in the embodiments of the present disclosure may become internal interfaces of the Open RAN, and procedures and information interactions between these internal interfaces may be implemented through software or programs.

In some embodiments, the access network device may include a central unit (CU) and a distributed unit (DU). The CU may also be referred to as a control unit. Protocol layers of the access network device may be split by using the CU-DU structure. Functions of some protocol layers are placed in the CU for centralized control; functions of the remaining part or all of the protocol layers are distributed in the DU, and the CU centrally controls the DU, but the present disclosure is not limited to this.

In some embodiments, the core network device may be one device, or may be multiple devices or a group of devices. The core network may include at least one of an evolved packet core (EPC), a 5G core network (5GCN), or a next generation Core (NGC).

It may be understood that the communication system described in the embodiments of the present disclosure is for the purpose of more clearly illustrating the technical solution of the embodiments of the present disclosure, and does not constitute a limitation on the technical solution provided in the embodiments of the present disclosure. Those ordinary skilled in the related art may know that with the evolution of the system architecture and the emergence of new business scenarios, the technical solution provided in the embodiments of the present disclosure is also applicable to similar technical problems.

The following embodiments of the present disclosure may be applied to the communication system 100 shown in FIG. 1, or part of the entities in the communication system 100, but the present disclosure is not limited to this. The entities shown in FIG. 1 are examples, and the communication system may include all or part of the entities in FIG. 1, or may include other entities other than those in FIG. 1. The numbers and forms of the entities are arbitrary, the entities may be physical or virtual, and the connection relationship between the entities is an example. The entities may be connected or disconnected, and the connection therebetween may be in any manner, which may be a direct connection or an indirect connection, and may be a wired connection or a wireless connection.

The embodiments of the present disclosure may be applied to long-term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile Communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine to Machine (M2M) system, Internet of Things (IoT) system, Vehicle-to-Everything (V2X) system, systems using other communication methods, next generation systems based on them, etc. In addition, multiple systems may also be combined (for example, the combination of LTE or LTE-A and 5G) for application.

In some embodiments of the present disclosure, the above communication system may introduce a first artificial intelligence (AI) model, or other models for prediction. The first AI model may include one or more models, and the first AI model may have one or more functions. The first AI model may be deployed on the side of the terminal or on the side of the network device.

In the NR communication, for the FR2 (frequency range 2) communication frequency band, since the high-frequency channel attenuates relatively quickly, in order to ensure the coverage range, beam-based transmission and reception may be used.

In some embodiments, the network device may configure a reference signal resource set for beam measurement, and the terminal may measure reference signal resources in the reference signal resource set, and report IDs of X reference signal resources with relatively strong signal qualities in measurement results, as well as a layer 1-reference signal receiving power (L1-RSRP) and/or a layer 1-signal to interference plus noise ratio (L1-SINR) of each reference signal resource of the X reference signal resources. The reference signal resource set configured by the network device includes X reference signal resources, each reference signal resource corresponds to a different transmission beam of the network device, and for each reference signal resource, the terminal needs to measure the reference signal resource through all reception beams, determine a beam measurement quality corresponding to each reception beam, and determine the strongest beam measurement quality from multiple beam measurement qualities. In the above measurement procedure, when the number of transmission beams of the network device is M and the number of reception beams of the terminal is N, the number of beam pairs that the terminal needs to measure is M*N.

In some embodiments, beam prediction is performed through an AI model. For example, for spatial-domain beam prediction, the terminal may measure only a part of the beam pairs. For example, the beam pairs measured by the terminal may be 1/8, 1/4, etc. of the M*N beam pairs. The measured beam measurement qualities of the part of the beam pairs are input into the AI model, and the beam qualities of the M*N beam pairs are predicted by the AI model. For example, for spatial-domain beam prediction, the terminal may measure only a part of the beams. For example, the beams measured by the terminal may be 1/8, 1/4, etc. of the M transmission beams. The measured beam measurement qualities of the part of the beams are input into the AI model, and the beam qualities of the M transmission beams are predicted by the AI model. For time-domain beam prediction, the terminal may measure the beam qualities of the beam pairs at a historical time to obtain the historical beam measurement qualities. According to the historical beam measurement qualities, the beam qualities of the beam pairs at a future time are predicted by the AI model. Similarly, for time-domain beam prediction, the beam pairs may also be replaced with transmission beams.

In some embodiments, for spatial-domain beam prediction, measurement results of beams in a beam set setA may be predicted based on measurement results of beams in a beam set setB; for time-domain beam prediction, measurement results of beams in a beam set setA at a future time may be predicted based on measurement results of beams in a beam set setB at a historical time.

In some embodiments, for spatial-domain beam prediction, the terminal may measure an L1-RSRP of each beam in a beam set setB, and input measured multiple L1-RSRPs into the AI model, to obtain an L1-RSRP of each beam in a beam set setA.

The relationship between the beam set setB and the beam set setA may include at least one of the following:
the beam set setB may be a subset of the beam set setA; for example, the beam set setA includes 32 reference signals (each reference signal corresponds to one beam direction), and the beam set setB includes N reference signals, where N<32, for example, N=8; or
the beam corresponding to the beam set setB is a wide beam, and the beam corresponding to the beam set setA is a narrow beam; for example, the beam set setA includes 32 reference signals, each reference signal corresponds to one beam direction, and the range covered by the 32 reference signals is 120 degrees; the beam set setB includes N reference signals, for example, N=8, and the range covered by the N reference signals is also 120 degrees; that is, the beam directions of multiple reference signals in the beam set setB cover the beam directions of multiple reference signals in the beam set setA, which may also be understood as that 32/N reference signals in the beam set setA have a quasi co-location (QCL) Type D relationship with the same reference signal in the beam set setB.

In some embodiments, for time-domain beam prediction, the terminal may measure an L1-RSRP of each beam in a beam set setB at a historical time, and input measured multiple L1-RSRPs into the AI model, to predict an L1-RSRP of each beam in a beam set setA at a future time.

The relationship between the beam set setB and the beam set setA may include at least one of the following:
the beam set setB may be a subset of the beam set setA;
the beam set setB is the same as the beam set setA; or
the beam corresponding to the beam set setB is a wide beam, and the beam corresponding to the beam set setA is a narrow beam.

In some embodiments, output data of the AI model mainly includes an L1-RSRP and/or a beam (pair) ID. However, in the MTRP scenario, beams of multiple TRPs may be required to serve the terminal at the same time. In this case, the terminal needs to perform group-based beam reporting, and the terminal needs to measure all the beams, so that the reference signal resource overhead is relatively large, and the complexity of measurement of the terminal is also relatively high. In this case, the AI model may be used to predict the beam corresponding to each TRP, and the accuracy rate of the beam prediction depends on the performance of the AI model. In the performance monitoring and training processes of the AI model, it is necessary to determine a best beam group. Therefore, how to determine the best beam group becomes an urgent problem to be solved.

FIG. 2A is a schematic interaction diagram of a communication method according to an embodiment of the present disclosure. The method may be performed by the above communication system. As shown in FIG. 2A, the method may include the following steps.

In step S2101, a network device sends first information to a terminal.

In some embodiments, the terminal may receive the first information. For example, the terminal may receive the first information sent by the network device. For another example, the terminal may also receive the first information sent by other entities.

In some embodiments, the first information may include configuration of a reference signal resource, and the reference signal resource may be configured for the terminal to perform beam measurement.

In some embodiments, the name of the first information is not limited, and may be, for example, "measurement request information", "measurement configuration information", "measurement indication information", etc.

In some embodiments, the first AI model is a model for performing beam prediction, and the first information may include at least one of: a first reference signal resource set, where a reference signal resource in the first reference signal resource set corresponds to a beam to be measured; a second reference signal resource set, where a reference signal resource in the second reference signal resource set corresponds to a beam to be predicted; a third reference signal resource set, where the third reference signal resource set includes a resource for interference measurement; or a relationship between the first reference signal resource set and the second reference signal resource set.

The term "beam to be measured" is a definition when the model is actually used, and the "beam to be measured" may be understood as a beam that serves as an input of the AI model and needs to be actually measured. The beam here may be understood as a transmission beam, or a transmission reception beam pair.

In some embodiments, a beam may correspond to a reference signal resource, the reference signal resource may correspond to and carry a reference signal, and each reference signal may correspond to one beam direction. For each beam, the network device may configure a reference signal resource corresponding to one reference signal, and a terminal may measure the beam according to the reference signal. The reference signal may be a channel state information-reference signal (CSI-RS) or a synchronization signal block (SSB).

In some embodiments, in a case that a beam measurement result is an L1-SINR, the first information may include the third reference signal resource set.

In some embodiments, the third reference signal resource set may include two resource sets for interference measurement, one of the two resource sets corresponds to the first reference signal resource set, and the other of the two resource sets corresponds to the second reference signal resource set.

In some embodiments, the third reference signal resource set may include the resource for interference measurement corresponding to each of the beams corresponding to the first reference signal resource set and the second reference signal resource set.

In some embodiments, in a case that the first AI model is a model for performing spatial-domain beam measurement, the relationship between the first reference signal resource set and the second reference signal resource set includes at least one of: the first reference signal resource set being a subset of the second reference signal resource set; or the beam corresponding to the first reference signal resource set being a wide beam, the beam corresponding to the second reference signal resource set being a narrow beam, and a beam coverage range corresponding to the first reference signal resource set being the same as a beam coverage range corresponding to the second reference signal resource set.

In some embodiments, in a case that the first reference signal resource set is a subset of the second reference signal resource set, the first information may only include the second reference signal resource set.

In a case that the first reference signal resource set is a subset of the second reference signal resource set, it indicates that the beam(s) to be measured corresponding to the first reference signal resource set is/are a subset of the beam(s) to be predicted corresponding to the second reference signal resource set. For example, in a case that the beam to be predicted corresponding to the second reference signal resource set includes 32 beams, and the beam to be measured corresponding to the first reference signal resource set may include 4 beams among the 32 beams to be predicted corresponding to the second reference signal resource set, the first reference signal resource set is a subset of the second reference signal resource set.

Whether and how the first reference signal resource set is a subset of the second reference signal resource set may be represented by which reference signal resources in the second reference signal resource set the first reference signal resource set corresponds to. For example, a beam set corresponding to the second reference signal resource set is denoted as setA, the beam set setA includes 32 beams (for convenience of explanation, the 32 beams may be recorded as beam 1, beam 2, beam 3, beam 4, beam 5, ..., beam 30, beam 31, beam 32), a beam set corresponding to the first reference signal resource set is denoted as setB, the beam set setB includes 4 beams (for convenience of explanation, the 4 beams may be recorded as beam 1, beam 2, beam 3, beam 4), beam 1 in the beam set setB corresponds to beam 8 in the beam set setA, beam 2 in the beam set setB corresponds to beam 16 in the beam set setA, beam 3 in the beam set setB corresponds to beam 24 in the beam set setA, and beam 4 in the beam set setB corresponds to beam 32 in the beam set setA. Through the correspondence between the beams in the beam set setB and the beams in the beam set setA, it may be seen that the 4 beams in the beam set setB are a subset of the 32 beams in the beam set setA.

It is to be noted that the number of the beams corresponding to the first reference signal resource set and the number of the beams corresponding to the second reference signal resource set are illustrative examples, and the correspondence between the beams corresponding to the first reference signal resource set and the beams corresponding to the second reference signal resource set is also an illustrative example, which are not limited in the embodiments of the present disclosure.

The beam coverage range corresponding to the first reference signal resource set being the same as the beam coverage range corresponding to the second reference signal resource set may be interpreted as that each wide beam corresponding to the first reference signal resource set may cover multiple narrow beams corresponding to the second reference signal resource set. For example, in a case that a beam set corresponding to the first reference signal resource set is denoted as setB, the beam set setB includes 8 wide beams (for convenience of explanation, the 8 beams may be recorded as beam 1, beam 2, beam 3, beam 4, ..., beam 8), a beam set corresponding to the second reference signal resource set is denoted as setA, the beam set setA includes 32 narrow beams (for convenience of explanation, the 32 beams may be recorded as beam 1, beam 2, beam 3, beam 4, beam 5, ..., beam 30, beam 31, beam 32 ), and the correspondence between each wide beam corresponding to the first reference signal resource set and the narrow beams corresponding to the second reference signal resource set covered by the wide beam may be expressed as that beam 1 in the beam set setB covers beam 1, beam 2, beam 3 and beam 4 in the beam set setA, beam 2 in the beam set setB covers beam 5, beam 6, beam 7 and beam 8 in the beam set setA, and so on, beam 8 in the beam set setB covers beam 29, beam 30, beam 31 and beam 32 in the beam set setA.

In some embodiments, in a case that the first reference signal resource set is a subset of the second reference signal resource set, the network device may send the second reference signal resource set to the terminal.

It is to be noted that "the network device may send the second reference signal resource set to the terminal" may be interpreted as that the network device sends the second reference signal resource set to the terminal, but does not send the first reference signal resource set to the terminal.

In some embodiments, in a case that the first AI model is a model for performing time-domain beam measurement, the relationship between the first reference signal resource set and the second reference signal resource set includes at least one of: the first reference signal resource set being a subset of the second reference signal resource set; the first reference signal resource set being the same as the second reference signal resource set; or the beam corresponding to the first reference signal resource set being a wide beam, the beam corresponding to the second reference signal resource set being a narrow beam, and a beam coverage range corresponding to the first reference signal resource set being the same as a beam coverage range corresponding to the second reference signal resource set.

In some embodiments, in a case that the first reference signal resource set is a subset of the second reference signal resource set, the first information may only include the second reference signal resource set.

The first reference signal resource set being the same as the second reference signal resource set means that the beam to be measured corresponding to the first reference signal resource set is the same as the beam to be predicted corresponding to the second reference signal resource set. For the time-domain beam prediction model, a beam measurement result of each beam corresponding to the first reference signal resource set measured at a historical time may be used to predict a beam measurement result of each beam corresponding to the second reference signal resource set at a future time. In this way, the terminal does not need to perform any measurement at the future time.

In some embodiments, the first reference signal resource set may include a plurality of fourth reference signal resource sets, and different fourth reference signal resource sets of the plurality of fourth reference signal resource sets correspond to different transmission reception points (TRPs); and the second reference signal resource set may include a plurality of fifth reference signal resource sets, and different fifth reference signal resource sets of the plurality of fifth reference signal resource sets correspond to different TRPs.

For example, in a case that the TRPs include a first TRP and a second TRP, the first reference signal resource set may include fourth reference signal resource set A and fourth reference signal resource set B, and the second reference signal resource set includes fifth reference signal resource set A and fifth reference signal resource set B, fourth reference signal resource set A corresponds to fifth reference signal resource set A, fourth reference signal resource set B corresponds to fifth reference signal resource set B, fourth reference signal resource set A and fifth reference signal resource set A correspond to the first TRP, and fourth reference signal resource set B and fifth reference signal resource set B correspond to the second TRP. That is, fourth reference signal resource set A is the beam to be measured corresponding to the first TRP, and fifth reference signal resource set A is the beam to be predicted corresponding to the first TRP; fourth reference signal resource set B is the beam to be measured corresponding to the second TRP, and fifth reference signal resource set B is the beam to be predicted corresponding to the second TRP.

In some embodiments, "different fourth reference signal resource sets corresponding to different TRPs" and "different fifth reference signal resource sets corresponding to different TRPs" may be understood as that different fifth reference signal resource sets correspond to different fourth reference signal resource sets, that is, the fifth reference signal resource sets have one-to-one correspondence with the fourth reference signal resource sets.

In some embodiments, in a case that the first AI model is a model for performing spatial-domain beam measurement, a relationship between the fourth reference signal resource set and the fifth reference signal resource set includes at least one of: the fourth reference signal resource set being a subset of the fifth reference signal resource set; or a beam corresponding to the fourth reference signal resource set being a wide beam, a beam corresponding to the fifth reference signal resource set being a narrow beam, and a beam coverage range corresponding to the fourth reference signal resource set being the same as a beam coverage range corresponding to the fifth reference signal resource set.

In some embodiments, in a case that the first AI model is a model for performing time-domain beam measurement, a relationship between the fourth reference signal resource set and the fifth reference signal resource set includes at least one of: the fourth reference signal resource set being a subset of the fifth reference signal resource set; the fourth reference signal resource set being the same as the fifth reference signal resource set; or a beam corresponding to the fourth reference signal resource set being a wide beam, a beam corresponding to the fifth reference signal resource set being a narrow beam, and a beam coverage range corresponding to the fourth reference signal resource set being the same as a beam coverage range corresponding to the fifth reference signal resource set.

It is to be noted that, for the description of the relationship between the fourth reference signal resource set and the fifth reference signal resource set, reference may be made to the description of the relationship between the first reference signal resource set and the second reference signal resource set, which will not be repeated here.

It is also to be noted that when the fourth reference signal resource set and the fifth reference signal resource set correspond to the same TRP, the fourth reference signal resource set and the fifth reference signal resource set have the above relationship.

In step S2102, for each beam group, the terminal performs beam measurement according to the first information to obtain a first beam measurement result of a first beam and a second beam measurement result of a second beam, and determines a beam group measurement result of the beam group according to the first beam measurement result and the second beam measurement result.

In some embodiments, the first beam measurement result may include a first beam quality, and the second beam measurement result may include a second beam quality.

In some embodiments, the first beam quality and the second beam quality each may include an L1-RSRP or an L1-SINR.

In some embodiments, the first beam measurement result and the second beam measurement result each may be an L1-RSRP. The terminal performs beam measurement based on a reference signal resource corresponding to the first beam to obtain the first beam measurement result; and the terminal performs beam measurement based on a reference signal resource corresponding to the second beam to obtain the second beam measurement result.

In some embodiments, the first beam measurement result and the second beam measurement result each may be an L1-SINR. The terminal may perform beam measurement based on a reference signal resource corresponding to the first beam and the reference signal resource in the third reference signal resource set to obtain the first beam measurement result, and performs beam measurement based on a reference signal resource corresponding to the second beam and the reference signal resource in the third reference signal resource set to obtain the second beam measurement result.

In some embodiments, the first beam measurement result may be an L1-RSRP, and the second beam measurement result may be an L1-SINR. The terminal may perform beam measurement based on a reference signal resource corresponding to the first beam to obtain the first beam measurement result, and perform beam measurement based on a reference signal resource corresponding to the second beam and the reference signal resource in the third reference signal resource set to obtain the second beam measurement result.

In some embodiments, the beam group measurement result may be determined in at least one of the following manners: taking an average of the first beam measurement result and the second beam measurement result as the beam group measurement result; taking a weighted average of the first beam measurement result and the second beam measurement result as the beam group measurement result; or taking a sum of the first measurement result, the second measurement result, and a product of the first measurement result and the second measurement result as the beam group measurement result.

For example, in a case that the first beam measurement result is denoted as SINR#1 and the second beam measurement result is denoted as SINR#2, the beam group measurement result is denoted as SINR-group, and SINR-group=(SINR#1+SINR#2)/2.

For another example, in a case that the first beam measurement result is denoted as SINR#1 and the second beam measurement result is denoted as SINR#2, the beam group measurement result is denoted as SINR-group, and SINR-group=W1*SINR#1+W2*SINR#2, where W1 is a weight corresponding to the first beam, and W2 is a weight corresponding to the second beam. W1 and W2 may be predefined or indicated by the network device, and may also be determined based on the first beam measurement result and the second beam measurement result. For example, in a case that SINR#1>SINR#2, W1>W2, the maximum value of W1 may be 1, and the minimum value of W2 may be 0; or, in a case that SINR#1>SINR#2, W1<W2, the maximum value of W2 may be 1, and the minimum value of W1 may be 0.

For another example, the beam group measurement result may be calculated by the Shannon formula, and the first beam measurement result, the second beam measurement result, and the beam group measurement result may satisfy the following formula: log2(1+SINR-group)=log2(1+SINR#1)+log2(1+SINR#2).

From the above formula, we may get: SINR-group=SINR#1+SINR#2+SINR#1*SINR#2.

In step S2103, the terminal determines model performance monitoring data according to the beam group measurement result.

In some embodiments, the name of the model performance monitoring data is not limited, and may be, for example, "performance report", "performance monitoring report", "model monitoring report", etc.

In some embodiments, the model performance monitoring data may be used to determine the performance of the first AI model.

In some embodiments, the model performance monitoring data may include at least one of: beam information of K beam groups; a performance value of the first AI model; first data, where the first data includes at least one of: model input data of the first AI model, model output data of the first AI model, or measurement data corresponding to the model output data, where the model output data is data output by the first AI model according to the model input data; a specified event, where the specified event is triggered based on a comparison result between the performance value of the first AI model and a first threshold value or a first offset value; or first operation information, where the first operation information indicates that a management operation is performed on the first AI model, where the management operation includes any one of: activating the first AI model, deactivating the first AI model, switching the first AI model, and not using an AI model.

In some embodiments, the K beam groups may be determined from at least one beam group according to the beam group measurement result.

In some embodiments, the K beam groups may be best K beam groups, the terminal may take beam groups corresponding to best K beam group measurement results as the best K beam groups, and the best K beam group measurement results include first K beam group measurement results of at least one instance of the beam group measurement result arranged in a descending order.

For example, the terminal may arrange at least one beam group measurement result corresponding to at least one beam group in a descending order, determine the first (top) K beam group measurement results as the best K beam group measurement results, and take K beam groups corresponding to the best K beam group measurement results as the best K beam groups.

In some embodiments, the beam information may include at least one of: an identifier of a reference signal resource corresponding to each beam in each best beam group; or a beam quality corresponding to the identifier of the reference signal resource.

The beam quality may be an L1-RSRP or an L1-SINR.

In some embodiments, the performance value of the first AI model may indicate a performance indicator of the first AI model.

In some embodiments, in a case that the first AI model is deployed on the side of the network device, the first data may include the model input data of the first AI model and the measurement data corresponding to the model output data; in a case that the first AI model is deployed on the side of the terminal, the first data may include the model output data and the measurement data corresponding to the model output data.

In some embodiments, the performance value may include at least one of: a beam group prediction accuracy rate, where the beam group prediction accuracy rate is an accuracy rate of at least one predicted beam group including an actual best beam group; a beam group quality difference, where the beam group quality difference is a difference between a measured beam quality of a first beam group and a measured beam quality of a second beam group, where the first beam group is a beam group with a strongest predicted beam quality, and the second beam group is a beam group with a strongest measured beam quality; or a predicted beam group quality difference, where the predicted beam group quality difference is a difference between a predicted beam quality of the first beam group and a measured beam quality of the first beam group.

In some embodiments, the beam group prediction accuracy rate may indicate whether the at least one predicted beam group includes the actual best beam group. The actual best beam group may be a beam group with the best beam group measurement result.

For example, in a case that the at least one predicted beam group includes a first beam group, a second beam group and a third beam group, and the actual best beam group is the second beam group, it is determined that the beam group prediction is accurate; in a case that the at least one predicted beam group includes a first beam group, a second beam group and a third beam group, and the actual best beam group is a fourth beam group, it is determined that the beam group prediction is inaccurate.

In some embodiments, the beam group prediction accuracy rate may be N/M, where M is the number of times the model produces output, and N is the number of times the model produces output for which the beam group prediction is accurate.

In some embodiments, the specified event may be used to determine the performance of the first AI model.

In some embodiments, the specified event may be triggered based on the comparison result between the performance value of the first AI model and the first threshold value or the first offset value.

In some embodiments, the first threshold value or the first offset value may be specified by a protocol, configured by the network device, or an empirical value, which is not limited in the embodiments of the present disclosure.

In some embodiments, the specified event may include at least one of: a first event, a second event, a third event, a fourth event, a fifth event, or a sixth event.

It is to be noted that the above specified events are illustrative examples only, and the embodiments of the present disclosure do not limit the specific events included in the specified events.

In some embodiments, the terminal triggers the first event when determining that the beam group prediction accuracy rate is less than a first accuracy threshold according to the beam group measurement result.

In some embodiments, the terminal triggers the second event when determining that the beam group prediction accuracy rate is greater than a second accuracy threshold according to the beam group measurement result.

In some embodiments, the terminal triggers the third event when determining that the beam group quality difference is less than a first difference threshold according to the beam group measurement result.

In some embodiments, the terminal triggers the fourth event when determining that the beam group quality difference is greater than a second difference threshold according to the beam group measurement result.

In some embodiments, the terminal triggers the fifth event when determining that the predicted beam group quality difference is less than a third difference threshold according to the beam group measurement result.

In some embodiments, the terminal triggers the sixth event when determining that the predicted beam group quality difference is greater than a fourth difference threshold according to the beam group measurement result.

For example, the first accuracy threshold may be 80%, the second accuracy threshold may be 90%, the first difference threshold may be 1dB, and the second difference threshold may be 3dB. The first event is triggered when the beam group prediction accuracy rate is less than 80%, the second event is triggered when the beam prediction accuracy rate is greater than 90%, the third event is triggered when the beam group quality difference is less than 1dB, and the fourth event is triggered when the beam group quality difference is greater than 3dB.

In some embodiments, the first operation information may indicate that a management operation is performed on the first AI model.

In some embodiments, the management operation includes any one of: activating the first AI model, deactivating the first AI model, switching the first AI model, and not using an AI model.

In some embodiments, "switching the first AI model" may be interpreted as deactivating the first AI model and activating a second AI model, where the second AI model may be any model except the first AI model, which is not limited in the embodiments of the present disclosure.

In some embodiments, "not using an AI model" may be interpreted as not using any AI model, and may also be called fallback, that is, falling back to a traditional mode (a mode that does not use the AI model).

In some embodiments, the model output data and the measurement data corresponding to the model output data may be determined according to the beam group measurement result, and the first operation information may be determined according to the model output data and the measurement data corresponding to the model output data.

In some embodiments, in a case that a difference between the model output data and the measurement data corresponding to the model output data is less than or equal to a first difference threshold, it may be determined that a performance of the first AI model meets a performance requirement; in a case that the difference between the model output data and the measurement data corresponding to the model output data is greater than the first difference threshold, it may be determined that the performance of the first AI model does not meet the performance requirement.

It is to be noted that the above method of determining whether the performance of the first AI model meets the performance requirement is an illustrative example only, which is not limited in the embodiments of the present disclosure.

In some embodiments, the model output data and the measurement data corresponding to the model output data may be used to determine the performance of the first AI model.

In some embodiments, the terminal may determine the model input data of the first AI model, input the model input data into the first AI model, and obtain the model output data output by the first AI model.

In some embodiments, the terminal may determine the model input data of the first AI model based on the beam group measurement result.

In some embodiments, in a case that the first AI model is a model for performing spatial-domain beam measurement, the model input data of the first AI model may include at least one of: L1-RSRPs of N beams corresponding to the first reference signal resource set, where N is a positive integer; identifiers of reference signal resources corresponding to N beams corresponding to the first reference signal resource set; or first indication information, where the first indication information indicates that beams contained in at least one group in group-based beam information output by the first AI model are two beams able to be simultaneously received and/or simultaneously sent by the terminal.

In some embodiments, an identifier of the reference signal resource may be a synchronization signal block (SSB) ID or a channel state information-reference signal (CSI-RS) ID.

In some embodiments, the first indication information may be indicated by the network device to the terminal, or may be determined autonomously by the terminal.

In some embodiments, in a case that the first AI model may predict that two beams able to be simultaneously received and/or simultaneously sent by the terminal serve as a group, the model input data may include the first indication information, indicating that the first AI model is expected to output only two beams able to be simultaneously received by the terminal as a group; or indicating that the first AI model is expected to output only two beams able to be simultaneously sent by the terminal as a group; or indicating that the first AI model is expected to output two beams able to be simultaneously received and simultaneously sent by the terminal as a group. In a case that the first AI model may only predict that two beams able to be simultaneously received by the terminal serve as a group, or the first AI model may only predict that two beams able to be simultaneously sent by the terminal serve as a group, or the first AI model may only predict that two beams able to be simultaneously received and simultaneously sent by the terminal serve as a group, the model input data may not include the first indication information.

In some embodiments, in a case that the first AI model is a model for performing time-domain beam measurement, the model input data of the first AI model may include at least one of: at least one historical time; L1-RSRPs or L1-SINRs of N beams corresponding to the first reference signal resource set corresponding to each historical time, where N is a positive integer; identifiers of reference signal resources corresponding to N beams corresponding to the first reference signal resource set corresponding to each historical time; or third indication information, where the third indication information indicates that beams contained in at least one group in group-based beam information output by the first AI model are two beams able to be simultaneously received and/or simultaneously sent by the terminal.

In some embodiments, the historical time may be a time when measurement is performed on the first reference signal resource set.

In some embodiments, multiple historical times may be provided, and each historical time may be a time when one instance of measurement is performed on the first reference signal resource set.

In some embodiments, the first reference signal resource sets corresponding to different historical times may be the same or different, which is not limited in the embodiments of the present disclosure.

The third indication information may be included in the model input data or not included in the model input data, and the details are the same as those in the description of the first indication information.

In some embodiments, the third indication information may be indicated by the network device to the terminal, or may be determined autonomously by the terminal.

In some embodiments, in a case that the first AI model is a model for performing spatial-domain beam measurement, the model output data of the first AI model may include at least one of: at least one group; identifiers of two reference signal resources corresponding to each group, where the reference signal resource is the reference signal resource in the second reference signal resource set; a beam quality corresponding to the identifier of each reference signal resource; at least one third beam; an identifier of a reference signal resource corresponding to each third beam, where the reference signal resource is the reference signal resource in the second reference signal resource set; a beam quality corresponding to each third beam; or second indication information, where the second indication information indicates that beams contained in at least one group in group-based beam information output by the first AI model are two beams able to be simultaneously received and/or simultaneously sent by the terminal.

In some embodiments, the group may be a beam group.

In some embodiments, the two reference signal resources corresponding to each group may be two beams in the second reference signal resource set.

In some embodiments, the two reference signal resources corresponding to each group may be two beams in two fifth reference signal resource sets, respectively.

For example, in a case that the beam group includes reference signal resource A and reference signal resource B, reference signal resource A may be a beam in fifth reference signal resource set A, and reference signal resource B may be a beam in fifth reference signal resource set B.

In some embodiments, in a case that the model output data includes the third beam, the model output data does not include any beam reported in a group with the third beam.

In some embodiments, the terminal may separately indicate that the beams contained in each group are two beams able to be simultaneously received and/or simultaneously sent by the terminal.

In some embodiments, the terminal may simultaneously indicate that the beams contained in each group are two beams able to be simultaneously received and/or simultaneously sent by the terminal.

In some embodiments, in a case that the first AI model may predict that two beams able to be simultaneously received and/or simultaneously sent by the terminal serve as a group, and the model input data does not include the first indication information, the output data may include the second indication information. In a case that the first AI model may predict that two beams able to be simultaneously received and/or simultaneously sent by the terminal serve as a group, and the model input data includes the first indication information, the model output data does not need to include the second indication information. In a case that the first AI model may only predict that two beams able to be simultaneously received by the terminal serve as a group, or the first AI model may only predict that two beams able to be simultaneously sent by the terminal serve as a group, or the first AI model may only predict that two beams able to be simultaneously received and simultaneously sent by the terminal serve as a group, the model output data may not include the second indication information.

It is to be noted that all the information included in the model output data is the information predicted by the first AI model.

In some embodiments, in a case that the first AI model is a model for performing time-domain beam measurement, the model output data of the first AI model may include at least one of: at least one future time, where the at least one future time each is a time corresponding to a beam predicted by the first AI model; at least one group corresponding to each future time; identifiers of two reference signal resources corresponding to each group corresponding to each future time, where the reference signal resource is the reference signal resource in the second reference signal resource set; a beam quality corresponding to the identifier of each reference signal resource corresponding to each future time; at least one fourth beam corresponding to each future time; an identifier of a reference signal resource corresponding to each fourth beam corresponding to each future time, where the reference signal resource is the reference signal resource in the second reference signal resource set; a beam quality corresponding to each fourth beam corresponding to each future time; or fourth indication information, where the fourth indication information indicates that beams contained in at least one group corresponding to at least one future time in group-based beam information output by the first AI model are two beams able to be simultaneously received and/or simultaneously sent by the terminal.

In some embodiments, the future time may be a time when beam prediction is performed by the first AI model.

In some embodiments, multiple future times may be provided, and one instance of beam prediction may be performed by the first AI model at each future time.

In some embodiments, the terminal may report the model output data corresponding to each future time separately.

In some embodiments, at each future time, the terminal may separately indicate that the beams contained in each group are two beams able to be simultaneously received and/or simultaneously sent by the terminal.

In some embodiments, at each future time, the terminal may simultaneously indicate that the beams contained in each group are two beams able to be simultaneously received and/or simultaneously sent by the terminal.

In some embodiments, for multiple future times, the terminal may simultaneously indicate that the beams contained in each of multiple groups are two beams able to be simultaneously received and/or simultaneously sent by the terminal.

In some embodiments, the fourth indication information may be included in the model output data or not included in the model output data, and the details are the same as those in the description of the second indication information.

In some embodiments, the measurement data corresponding to the model output data may be measurement data of the beam, which is corresponding to the model output data, in the second beam measurement result.

In some embodiments, the first AI model is in an inactive state, it is determined that a performance of the first AI model meets a performance requirement according to the model output data and the measurement data corresponding to the model output data, and it is determined that the first operation information is activating the first AI model.

In some embodiments, the first AI model is in an active state, it is determined that a performance of the first AI model does not meet a performance requirement according to the model output data and the measurement data corresponding to the model output data, and it is determined that the first operation information is deactivating the first AI model.

In step S2104, the terminal sends model performance monitoring data to the network device.

In some embodiments, the network device may receive the model performance monitoring data. For example, the network device may receive the model performance monitoring data sent by the terminal. For another example, the network device may also receive the model performance monitoring data sent by other entities.

In some embodiments, the terminal determines that the beam group prediction accuracy rate is less than the first accuracy threshold according to the beam group measurement result, and sends the first event to the network device.

In some embodiments, the terminal determines that the beam group prediction accuracy rate is greater than the second accuracy threshold according to the beam group measurement result, and sends the second event to the network device.

In some embodiments, the terminal determines that the beam group quality difference is less than the first difference threshold according to the beam group measurement result, and sends the third event to the network device.

In some embodiments, the terminal determines that the beam group quality difference is greater than the second difference threshold according to the beam group measurement result, and sends the fourth event to the network device.

In some embodiments, the terminal determines that the predicted beam group quality difference is less than the third difference threshold according to the beam group measurement result, and sends the fifth event to the network device.

In some embodiments, the terminal determines that the predicted beam group quality difference is greater than the fourth difference threshold according to the beam group measurement result, and sends the sixth event to the network device.

In some embodiments, when the beam measurement result may trigger multiple specified events, the multiple specified events may be sent to the network device.

For example, in a case that it is determined according to the beam group measurement result that the beam group quality difference is less than the first difference threshold, and the predicted beam group quality difference is less than the third difference threshold, the third event and the fifth event may be sent to the network device.

In some embodiments, after the terminal determines that the specified event is triggered, the terminal may report an ID of the specified event to the network device.

In some embodiments, the terminal may also report the performance value corresponding to the specified event to the network device.

In some embodiments, the terminal may send the model performance monitoring data including the performance value to the network device.

In some embodiments, the terminal may determine the specified event according to the performance value, and send the model performance monitoring data including the specified event to the network device.

It is to be noted that the terminal may send one or more items of the model performance monitoring data to the network device, which is not limited in the embodiments of the present disclosure.

Using the above method, the terminal may perform the beam measurement according to the first information sent by the network device, obtain the beam group measurement result of the at least one beam group, and send the model performance monitoring data to the network device according to the beam group measurement result. In this way, the network device may perform model performance monitoring according to the model performance monitoring data, thereby improving the system performance.

The methods involved in embodiments of the present disclosure may include at least one of the above steps S2101 to S2104. For example, step S2101 may be implemented as an independent embodiment, step S2104 may be implemented as an independent embodiment, and steps S2102+S2103+S2104 may be implemented as an independent embodiment, but the present disclosure is not limited to this.

In some embodiments, the above steps S2101 to S2104 are all optional steps. For example, step S2101 is optional, and one or more of these steps may be omitted or replaced in different embodiments. For another example, step S2104 is optional, and one or more of these steps may be omitted or replaced in different embodiments.

In some embodiments, reference may be made to other optional implementations described before or after the description corresponding to FIG. 2A.

FIG. 2B is a schematic interaction diagram of a communication method according to an embodiment of the present disclosure. The method may be performed by the above communication system. As shown in FIG. 2B, the method may include the following steps.

In step S2201, a network device sends first information to a terminal.

For optional implementations of step S2201, reference may be made to the optional implementations of step S2101 in FIG. 2A and other related parts in the embodiment involved in FIG. 2A, which are not repeated here.

In step S2202, for each beam group, the terminal performs beam measurement according to the first information to obtain a first beam measurement result of a first beam and a second beam measurement result of a second beam, and determines a beam group measurement result of the beam group according to the first beam measurement result and the second beam measurement result.

For optional implementations of step S2202, reference may be made to the optional implementations of step S2102 in FIG. 2A and other related parts in the embodiment involved in FIG. 2A, which are not repeated here.

In step S2203, the terminal determines model training data according to the beam group measurement result.

In some embodiments, the model training data may include model input data and a beam measurement result of a beam to be predicted.

It is to be noted that for details of the model input data, reference may be made to the description in step S2103, which are not repeated here. The beam measurement result of the beam to be predicted may be a beam measurement result obtained by the terminal performing beam measurement according to a reference signal resource in a second reference signal resource set.

In some embodiments, the beam to be predicted may also be interpreted as a beam output by a first AI model.

In step S2204, the terminal sends the model training data to the network device.

In some embodiments, the network device may receive the model training data. For example, the network device may receive the model training data sent by the terminal. For another example, the network device may also receive the model training data sent by other entities.

In some embodiments, the first AI model is deployed on the side of the network device, and the model training data may be used for the network device to perform model training to obtain the first AI model.

Using the above method, the terminal may perform the beam measurement according to the first information sent by the network device, obtain the beam group measurement result of at least one beam group, and send the model training data to the network device according to the beam group measurement result. In this way, the network device may perform the model training according to the model training data to obtain the first AI model.

The methods involved in embodiments of the present disclosure may include at least one of the above steps S2201 to S2204. For example, step S2201 may be implemented as an independent embodiment, step S2204 may be implemented as an independent embodiment, and steps S2202+S2203+S2204 may be implemented as an independent embodiment, but the present disclosure is not limited to this.

In some embodiments, the above steps S2201 to S2204 are all optional steps. For example, step S2201 is optional, and one or more of these steps may be omitted or replaced in different embodiments. For another example, step S2204 is optional, and one or more of these steps may be omitted or replaced in different embodiments.

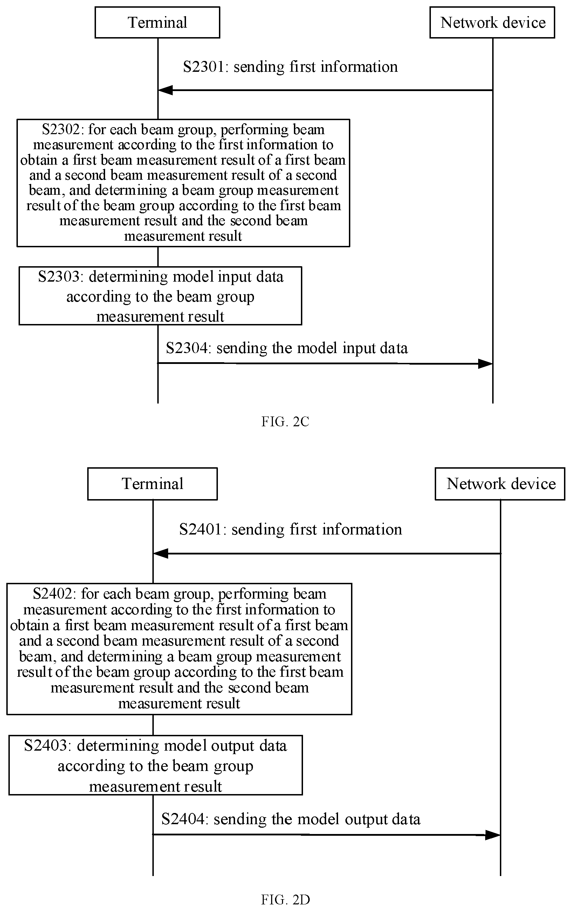

FIG. 2C is a schematic interaction diagram of a communication method according to an embodiment of the present disclosure. The method may be performed by the above communication system. As shown in FIG. 2C, the method may include the following steps.

In step S2301, a network device sends first information to a terminal.

For optional implementations of step S2301, reference may be made to the optional implementations of step S2101 in FIG. 2A and other related parts in the embodiment involved in FIG. 2A, which are not repeated here.

In step S2302, for each beam group, the terminal performs beam measurement according to the first information to obtain a first beam measurement result of a first beam and a second beam measurement result of a second beam, and determines a beam group measurement result of the beam group according to the first beam measurement result and the second beam measurement result.

For optional implementations of step S2302, reference may be made to the optional implementations of step S2102 in FIG. 2A and other related parts in the embodiment involved in FIG. 2A, which are not repeated here.

In step S2303, the terminal determines model input data according to the beam group measurement result.

It is to be noted that for details of the model input data, reference may be made to the description in step S2103, which are not repeated here.

In step S2304, the terminal sends the model input data to the network device.

In some embodiments, the network device may receive the model input data. For example, the network device may receive the model input data sent by the terminal. For another example, the network device may also receive the model input data sent by other entities.

In some embodiments, a first AI model is deployed on the side of the network device, and the model input data may be used for the network device to perform model inference to obtain a beam prediction result of a beam to be predicted.

Using the above method, the terminal may perform the beam measurement according to the first information sent by the network device, obtain the beam group measurement result of at least one beam group, and send the model input data to the network device according to the beam group measurement result. In this way, the network device may perform the model inference according to the model input data to obtain the beam prediction result output by the first AI model.

The methods involved in embodiments of the present disclosure may include at least one of the above steps S2301 to S2304. For example, step S2301 may be implemented as an independent embodiment, step S2304 may be implemented as an independent embodiment, and steps S2302+S2303+S2304 may be implemented as an independent embodiment, but the present disclosure is not limited to this.

In some embodiments, the above steps S2301 to S2304 are all optional steps. For example, step S2301 is optional, and one or more of these steps may be omitted or replaced in different embodiments. For another example, step S2304 is optional, and one or more of these steps may be omitted or replaced in different embodiments.

FIG. 2D is a schematic interaction diagram of a communication method according to an embodiment of the present disclosure. The method may be performed by the above communication system. As shown in FIG. 2D, the method may include the following steps.

In step S2401, a network device sends first information to a terminal.

For optional implementations of step S2401, reference may be made to the optional implementations of step S2101 in FIG. 2A and other related parts in the embodiment involved in FIG. 2A, which are not repeated here.

In step S2402, for each beam group, the terminal performs beam measurement according to the first information to obtain a first beam measurement result of a first beam and a second beam measurement result of a second beam, and determines a beam group measurement result of the beam group according to the first beam measurement result and the second beam measurement result.

For optional implementations of step S2402, reference may be made to the optional implementations of step S2102 in FIG. 2A and other related parts in the embodiment involved in FIG. 2A, which are not repeated here.

In step S2403, the terminal determines model output data according to the beam group measurement result.

It is to be noted that for details of the model output data, reference may be made to the description in step S2103, which are not repeated here.

In step S2404, the terminal sends the model output data to the network device.

In some embodiments, the network device may receive the model output data. For example, the network device may receive the model output data sent by the terminal. For another example, the network device may also receive the model output data sent by other entities.

In some embodiments, a first AI model is deployed on the side of the terminal, the model output data may be data output by the first AI model according to model input data, and the model output data may be used for the network device to perform beam management.

Using the above method, the terminal may perform the beam measurement according to the first information sent by the network device, obtain the beam group measurement result of at least one beam group, and send the model output data to the network device according to the beam group measurement result. In this way, the network device may perform the beam management according to the model output data.

The methods involved in embodiments of the present disclosure may include at least one of the above steps S2401 to S2404. For example, step S2401 may be implemented as an independent embodiment, step S2404 may be implemented as an independent embodiment, and steps S2402+S2403+S2404 may be implemented as an independent embodiment, but the present disclosure is not limited to this.

In some embodiments, the above steps S2401 to S2404 are all optional steps. For example, step S2401 is optional, and one or more of these steps may be omitted or replaced in different embodiments. For another example, step S2404 is optional, and one or more of these steps may be omitted or replaced in different embodiments.

In some embodiments, the names of information and the like are not limited to the names recorded in the embodiments, "information", "message", "signal", "signaling", "report", "configuration", "indication", "instruction", "command", "channel", "parameter", "domain", "field", "symbol", "codebook", "codeword", "codepoint", "bit", "data", "program", and "chip" may be used interchangeably.

In some embodiments, terms such as "acquire", "obtain", "get", "receive", "transmit", "bidirectionally transmit" and "transmit and/or receive" may be used interchangeably, and may be interpreted as receiving from other entities, obtaining from protocols, obtaining from higher layers, obtaining via processing by itself, independent realization and so on.

In some embodiments, terms such as "send", "emit", "report", "distribute", "transmit", "bidirectionally transmit", "transmit and/or receive" and the like may be used interchangeably.

In some embodiments, terms such as "certain", "preset", "predetermine", "set", "indicate", "particular", "arbitrary", "first" and the like may be used interchangeably, and "certain A", "preset A", "predetermined A", "set A", "indicated A", "particular A", "arbitrary A", "first A" and the like may be interpreted as an A prespecified in a protocol, an A obtained through setting, configuration or indication, or a particular A, a certain A, an arbitrary A or a first A, which is not limited here.

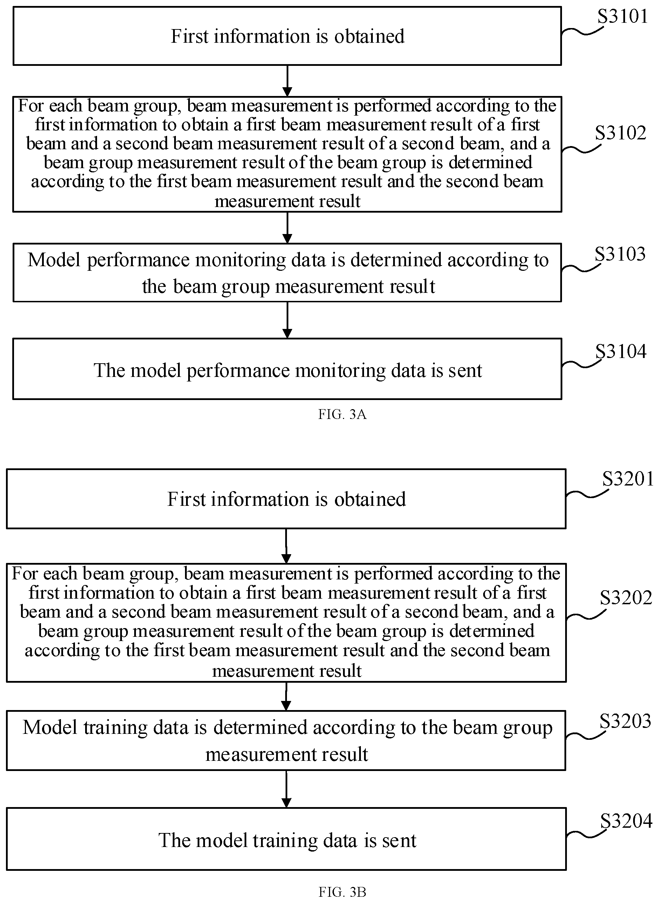

FIG. 3A is a flow chart of a communication method according to an embodiment of the present disclosure. As shown in FIG. 3A, an embodiment of the present disclosure relates to a communication method, which may be performed by a terminal, and include the following steps.

In step S3101, first information is obtained.

For optional implementations of step S3101, reference may be made to the optional implementations of step S2101 in FIG. 2A and other related parts in the embodiment involved in FIG. 2A, which are not repeated here.

In some embodiments, the terminal may receive the first information sent by a network device, but the present disclosure is not limited to this, and the terminal may also receive the first information sent by other entities.

In some embodiments, the terminal may obtain the first information specified by a protocol.

In some embodiments, the terminal may obtain the first information from an upper layer(s).

In some embodiments, step S3101 may be omitted, and the terminal may autonomously implement reference signal resources indicated by the first information, or the above function may be default.

In step S3102, for each beam group, beam measurement is performed according to the first information to obtain a first beam measurement result of a first beam and a second beam measurement result of a second beam, and a beam group measurement result of the beam group is determined according to the first beam measurement result and the second beam measurement result.

For optional implementations of step S3102, reference may be made to the optional implementations of step S2102 in FIG. 2A and other related parts in the embodiment involved in FIG. 2A, which are not repeated here.

In step S3103, model performance monitoring data is determined according to the beam group measurement result.

For optional implementations of step S3103, reference may be made to the optional implementations of step S2103 in FIG. 2A and other related parts in the embodiment involved in FIG. 2A, which are not repeated here.

In step S3104, the model performance monitoring data is sent.

For optional implementations of step S3104, reference may be made to the optional implementations of step S2104 in FIG. 2A and other related parts in the embodiment involved in FIG. 2A, which are not repeated here.

In some embodiments, the terminal may send the model performance monitoring data to the network device, but the present disclosure is not limited to this, and the terminal may also send the model performance monitoring data to other entities.

The methods involved in embodiments of the present disclosure may include at least one of the above steps S3101 to S3104. For example, step S3101 may be implemented as an independent embodiment, step S3104 may be implemented as an independent embodiment, and steps S3102+S3103 may be implemented as an independent embodiment, but the present disclosure is not limited to this.

In some embodiments, the above steps S3101 to S3104 are all optional steps. For example, steps S3101 and S3104 are optional, and one or more of these steps may be omitted or replaced in different embodiments.

In some embodiments, reference may be made to other optional implementations described before or after the description corresponding to FIG. 3A.

FIG. 3B is a flow chart of a communication method according to an embodiment of the present disclosure. As shown in FIG. 3B, an embodiment of the present disclosure relates to a communication method, which may be performed by a terminal, and include the following steps.

In step S3201, first information is obtained.

For optional implementations of step S3201, reference may be made to the optional implementations of step S2101 in FIG. 2A and step S3101 in FIG. 3A, and other related parts in the embodiments involved in FIG. 2A and FIG. 3A, which are not repeated here.

In step S3202, for each beam group, beam measurement is performed according to the first information to obtain a first beam measurement result of a first beam and a second beam measurement result of a second beam, and a beam group measurement result of the beam group is determined according to the first beam measurement result and the second beam measurement result.

For optional implementations of step S3202, reference may be made to the optional implementations of step S2102 in FIG. 2A and other related parts in the embodiment involved in FIG. 2A, which are not repeated here.

In step S3203, model training data is determined according to the beam group measurement result.

For optional implementations of step S3203, reference may be made to the optional implementations of step S2203 in FIG. 2B and other related parts in the embodiment involved in FIG. 2B, which are not repeated here.

In step S3204, the model training data is sent.

For optional implementations of step S3204, reference may be made to the optional implementations of step S2204 in FIG. 2B and other related parts in the embodiment involved in FIG. 2B, which are not repeated here.

In some embodiments, the terminal may send the model training data to the network device, but the present disclosure is not limited to this, and the terminal may also send the model training data to other entities.

The methods involved in embodiments of the present disclosure may include at least one of the above steps S3201 to S3204. For example, step S3201 may be implemented as an independent embodiment, step S3204 may be implemented as an independent embodiment, and steps S3202+S3203 may be implemented as an independent embodiment, but the present disclosure is not limited to this.

In some embodiments, the above steps S3201 to S3204 are all optional steps. For example, steps S3201 and S3204 are optional, and one or more of these steps may be omitted or replaced in different embodiments.

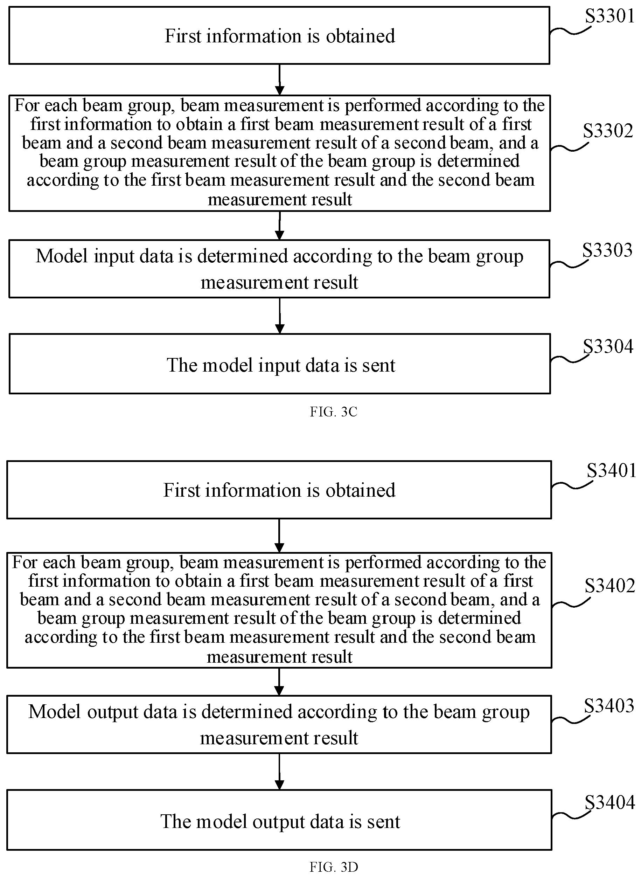

FIG. 3C is a flow chart of a communication method according to an embodiment of the present disclosure. As shown in FIG. 3C, an embodiment of the present disclosure relates to a communication method, which may be performed by a terminal, and include the following steps.

In step S3301, first information is obtained.

For optional implementations of step S3301, reference may be made to the optional implementations of step S2101 in FIG. 2A and step S3101 in FIG. 3A, and other related parts in the embodiments involved in FIG. 2A and FIG. 3A, which are not repeated here.

In step S3302, for each beam group, beam measurement is performed according to the first information to obtain a first beam measurement result of a first beam and a second beam measurement result of a second beam, and a beam group measurement result of the beam group is determined according to the first beam measurement result and the second beam measurement result.

For optional implementations of step S3302, reference may be made to the optional implementations of step S2102 in FIG. 2A and other related parts in the embodiment involved in FIG. 2A, which are not repeated here.

In step S3303, model input data is determined according to the beam group measurement result.

For optional implementations of step S3303, reference may be made to the optional implementations of step S2303 in FIG. 2C and other related parts in the embodiment involved in FIG. 2C, which are not repeated here.

In step S3304, the model input data is sent.

For optional implementations of step S3304, reference may be made to the optional implementations of step S2304 in FIG. 2C and other related parts in the embodiment involved in FIG. 2C, which are not repeated here.

In some embodiments, the terminal may send the model input data to the network device, but the present disclosure is not limited to this, and the terminal may also send the model input data to other entities.

The methods involved in embodiments of the present disclosure may include at least one of the above steps S3301 to S3304. For example, step S3301 may be implemented as an independent embodiment, step S3304 may be implemented as an independent embodiment, and steps S3302+S3303 may be implemented as an independent embodiment, but the present disclosure is not limited to this.

In some embodiments, the above steps S3301 to S3304 are all optional steps. For example, steps S**330**1 and S3304 are optional, and one or more of these steps may be omitted or replaced in different embodiments.

FIG. 3D is a flow chart of a communication method according to an embodiment of the present disclosure. As shown in FIG. 3D, an embodiment of the present disclosure relates to a communication method, which may be performed by a terminal, and include the following steps.

In step S3401, first information is obtained.

For optional implementations of step S3401, reference may be made to the optional implementations of step S2101 in FIG. 2A and step S3101 in FIG. 3A, and other related parts in the embodiments involved in FIG. 2A and FIG. 3A, which are not repeated here.

In step S3402, for each beam group, beam measurement is performed according to the first information to obtain a first beam measurement result of a first beam and a second beam measurement result of a second beam, and a beam group measurement result of the beam group is determined according to the first beam measurement result and the second beam measurement result.

For optional implementations of step S3402, reference may be made to the optional implementations of step S2102 in FIG. 2A and other related parts in the embodiment involved in FIG. 2A, which are not repeated here.

In step S3403, model output data is determined according to the beam group measurement result.

For optional implementations of step S3403, reference may be made to the optional implementations of step S2403 in FIG. 2D and other related parts in the embodiment involved in FIG. 2D, which are not repeated here.

In step S3404, the model output data is sent.

For optional implementations of step S3404, reference may be made to the optional implementations of step S2403 in FIG. 2D and other related parts in the embodiment involved in FIG. 2D, which are not repeated here.

The methods involved in embodiments of the present disclosure may include at least one of the above steps S3401 to S3404. For example, step S3401 may be implemented as an independent embodiment, step S3404 may be implemented as an independent embodiment, and steps S3402+S3403 may be implemented as an independent embodiment, but the present disclosure is not limited to this.

In some embodiments, the above steps S3401 to S3404 are all optional steps. For example, steps S**3**4**0**1 and S3404 are optional, and one or more of these steps may be omitted or replaced in different embodiments.

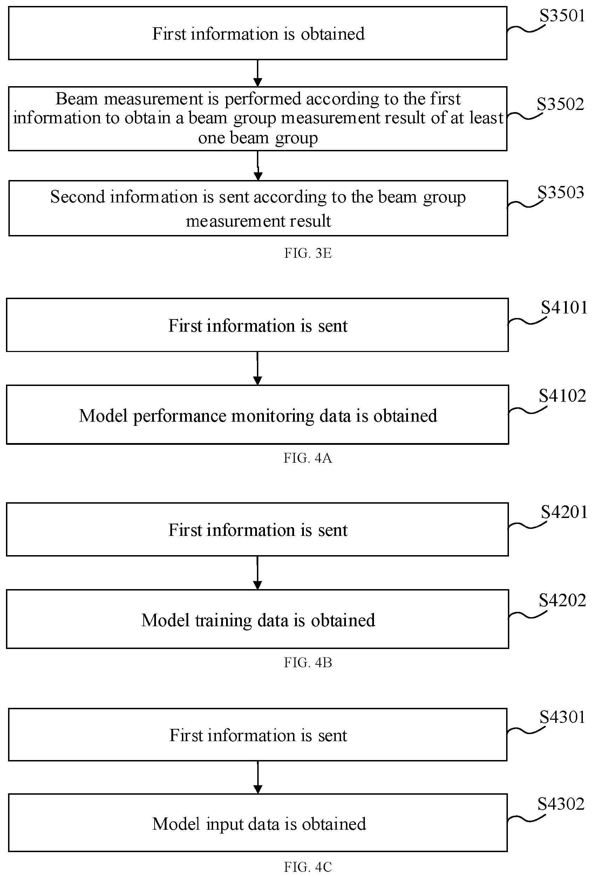

FIG. 3E is a flow chart of a communication method according to an embodiment of the present disclosure. As shown in FIG. 3E, an embodiment of the present disclosure relates to a communication method, which may be performed by a terminal, and include the following steps.

In step S3501, first information is obtained.

For optional implementations of step S3501, reference may be made to the optional implementations of step S2101 in FIG. 2A and step S3101 in FIG. 3A, and other related parts in the embodiments involved in FIG. 2A and FIG. 3A, which are not repeated here.

In step S3502, beam measurement is performed according to the first information to obtain a beam group measurement result of at least one beam group.

For optional implementations of step S3502, reference may be made to the optional implementations of step S2102 in FIG. 2A and other related parts in the embodiment involved in FIG. 2A, which are not repeated here.

In step S3503, second information is sent according to the beam group measurement result.

For optional implementations of step S3503, reference may be made to the optional implementations of step S2104 in FIG. 2A, step S2204 in FIG. 2B, step S2304 in FIG. 2C, step S2404 in FIG. 2D, step S3104 in FIG. 3A, step S3204 in FIG. 3B, step S3304 in FIG. 3C, and step S3404 in FIG. 3D, as well as other related parts in the embodiments involved in FIGS. 2A, 2B, 2C, 2D, 3A, 3B, 3C and 3D, which are not repeated here.

In some embodiments, the at least one beam group each includes a first beam and a second beam, and performing the beam measurement according to the first information to obtain the beam group measurement result of the at least one beam group includes:
for each beam group, performing the beam measurement according to the first information to obtain the first beam measurement result of the first beam and the second beam measurement result of the second beam, and determining the beam group measurement result of the beam group according to the first beam measurement result and the second beam measurement result.

In some embodiments, determining the beam group measurement result of the beam group according to the first beam measurement result and the second beam measurement result includes at least one of: taking an average of the first beam measurement result and the second beam measurement result as the beam group measurement result; taking a weighted average of the first beam measurement result and the second beam measurement result as the beam group measurement result; or taking a sum of the first measurement result, the second measurement result, and a product of the first measurement result and the second measurement result as the beam group measurement result.

In some embodiments, the first information includes at least one of: a first reference signal resource set, where a reference signal resource in the first reference signal resource set corresponds to a beam to be measured; a second reference signal resource set, where a reference signal resource in the second reference signal resource set corresponds to a beam to be predicted; a third reference signal resource set, where the third reference signal resource set includes a resource for interference measurement; or a relationship between the first reference signal resource set and the second reference signal resource set.

In some embodiments, the first AI model is a model for performing spatial-domain beam prediction, and the relationship between the first reference signal resource set and the second reference signal resource set includes at least one of: the first reference signal resource set being a subset of the second reference signal resource set; or the beam corresponding to the first reference signal resource set being a wide beam, the beam corresponding to the second reference signal resource set being a narrow beam, and a beam coverage range corresponding to the first reference signal resource set being the same as a beam coverage range corresponding to the second reference signal resource set.

In some embodiments, the first AI model is a model for performing time-domain beam prediction, and the relationship between the first reference signal resource set and the second reference signal resource set includes at least one of: the first reference signal resource set being a subset of the second reference signal resource set; the first reference signal resource set being the same as the second reference signal resource set; or the beam corresponding to the first reference signal resource set being a wide beam, the beam corresponding to the second reference signal resource set being a narrow beam, and a beam coverage range corresponding to the first reference signal resource set being the same as a beam coverage range corresponding to the second reference signal resource set.

In some embodiments, the first reference signal resource set includes a plurality of fourth reference signal resource sets, and different fourth reference signal resource sets of the plurality of fourth reference signal resource sets correspond to different transmission reception points (TRPs); and the second reference signal resource set includes a plurality of fifth reference signal resource sets, and different fifth reference signal resource sets of the plurality of fifth reference signal resource sets correspond to different TRPs.

In some embodiments, the first AI model is a model for performing spatial-domain beam prediction, and a relationship between the fourth reference signal resource set and the fifth reference signal resource set includes at least one of: the fourth reference signal resource set being a subset of the fifth reference signal resource set; or a beam corresponding to the fourth reference signal resource set being a wide beam, a beam corresponding to the fifth reference signal resource set being a narrow beam, and a beam coverage range corresponding to the fourth reference signal resource set being the same as a beam coverage range corresponding to the fifth reference signal resource set.

In some embodiments, the first AI model is a model for performing time-domain beam prediction, and a relationship between the fourth reference signal resource set and the fifth reference signal resource set includes at least one of: the fourth reference signal resource set being a subset of the fifth reference signal resource set; the fourth reference signal resource set being the same as the fifth reference signal resource set; or a beam corresponding to the fourth reference signal resource set being a wide beam, a beam corresponding to the fifth reference signal resource set being a narrow beam, and a beam coverage range corresponding to the fourth reference signal resource set being the same as a beam coverage range corresponding to the fifth reference signal resource set.

In some embodiments, the second information includes at least one of: model training data; model performance monitoring data; model input data; or model output data.

In some embodiments, the model training data includes the model input data and a beam measurement result of the beam to be predicted.

In some embodiments, the model performance monitoring data includes at least one of: beam information of K beam groups; a performance value of the first AI model; first data, where the first data includes at least one of: model input data of the first AI model, model output data of the first AI model, or measurement data corresponding to the model output data, where the model output data is data output by the first AI model according to the model input data; a specified event, where the specified event is triggered based on a comparison result between the performance value of the first AI model and a first threshold value or a first offset value; or first operation information, where the first operation information indicates that a management operation is performed on the first AI model, where the management operation includes any one of: activating the first AI model, deactivating the first AI model, switching the first AI model, and not using an AI model.

In some embodiments, the method further includes: determining the K beam groups from the at least one beam group according to the beam group measurement result.

In some embodiments, the K beam groups are best K beam groups, and determining the K beam groups from the at least one beam group according to the beam group measurement result includes: taking beam groups corresponding to best K beam group measurement results as the best K beam groups, where the best K beam group measurement results include first K beam group measurement results of at least one instance of the beam group measurement result arranged in a descending order.

In some embodiments, the beam information includes at least one of: an identifier of a reference signal resource corresponding to each beam in each best beam group; or a beam quality corresponding to the identifier of the reference signal resource.

In some embodiments, the performance value includes at least one of: a beam group prediction accuracy rate, where the beam group prediction accuracy rate is an accuracy rate of at least one predicted beam group including an actual best beam group; a beam group quality difference, where the beam group quality difference is a difference between a measured beam quality of a first beam group and a measured beam quality of a second beam group, where the first beam group is a beam group with a strongest predicted beam quality, and the second beam group is a beam group with a strongest measured beam quality; or a predicted beam group quality difference, where the predicted beam group quality difference is a difference between a predicted beam quality of the first beam group and a measured beam quality of the first beam group.

In some embodiments, the specified event includes at least one of: a first event, a second event, a third event, a fourth event, a fifth event or a sixth event; and sending the second information to the network device according to the beam group measurement result includes at least one of: determining that the beam group prediction accuracy rate is less than a first accuracy threshold according to the beam group measurement result, and sending the first event to the network device; determining that the beam group prediction accuracy rate is greater than a second accuracy threshold according to the beam group measurement result, and sending the second event to the network device; determining that the beam group quality difference is less than a first difference threshold according to the beam group measurement result, and sending the third event to the network device; determining that the beam group quality difference is greater than a second difference threshold according to the beam group measurement result, and sending the fourth event to the network device; determining that the predicted beam group quality difference is less than a third difference threshold according to the beam group measurement result, and sending the fifth event to the network device; or determining that the predicted beam group quality difference is greater than a fourth difference threshold according to the beam group measurement result, and sending the sixth event to the network device.

In some embodiments, sending the second information to the network device according to the beam group measurement result includes: determining the model output data and the measurement data corresponding to the model output data according to the beam group measurement result; determining the first operation information according to the model output data and the measurement data corresponding to the model output data; and sending the first operation information to the network device.

In some embodiments, determining the first operation information according to the model output data and the measurement data corresponding to the model output data includes:
the first AI model being in an inactive state, determining that a performance of the first AI model meets a performance requirement according to the model output data and the measurement data corresponding to the model output data, and determining that the first operation information is activating the first AI model; or the first AI model being in an active state, determining that a performance of the first AI model does not meet a performance requirement according to the model output data and the measurement data corresponding to the model output data, and determining that the first operation information is deactivating the first AI model.

In some embodiments, the first AI model is a model for performing spatial-domain beam prediction, and the model input data includes at least one of: beam qualities of N beams corresponding to the first reference signal resource set, where the beam quality includes a layer 1-reference signal receiving power (L1-RSRP) or a layer 1-signal to interference plus noise ratio (L1-SINR), and N is a positive integer; identifiers of reference signal resources corresponding to N beams corresponding to the first reference signal resource set; or first indication information, where the first indication information indicates that beams contained in at least one group in group-based beam information output by the first AI model are two beams able to be simultaneously received and/or simultaneously sent by the terminal.

In some embodiments, the first AI model is a model for performing spatial-domain beam prediction, and the model output data includes at least one of: at least one group; identifiers of two reference signal resources corresponding to each group, where the reference signal resource is the reference signal resource in the second reference signal resource set; a beam quality corresponding to the identifier of each reference signal resource; at least one third beam; an identifier of a reference signal resource corresponding to each third beam, where the reference signal resource is the reference signal resource in the second reference signal resource set; a beam quality corresponding to each third beam; or second indication information, where the second indication information indicates that beams contained in at least one group in group-based beam information output by the first AI model are two beams able to be simultaneously received and/or simultaneously sent by the terminal.

In some embodiments, the first AI model is a model for performing time-domain beam prediction, and the model input data includes at least one of: at least one historical time; beam qualities of N beams corresponding to the first reference signal resource set corresponding to each historical time, where the beam quality includes an L1-RSRP or an L1-SINR, and N is a positive integer; identifiers of reference signal resources corresponding to N beams corresponding to the first reference signal resource set corresponding to each historical time; or third indication information, where the third indication information indicates that beams contained in at least one group in group-based beam information output by the first AI model are two beams able to be simultaneously received and/or simultaneously sent by the terminal.

In some embodiments, the first AI model is a model for performing time-domain beam prediction, and the model output data includes at least one of: at least one future time, where the at least one future time each is a time corresponding to a beam predicted by the first AI model; at least one group corresponding to each future time; identifiers of two reference signal resources corresponding to each group corresponding to each future time, where the reference signal resource is the reference signal resource in the second reference signal resource set; a beam quality corresponding to the identifier of each reference signal resource corresponding to each future time; at least one fourth beam corresponding to each future time; an identifier of a reference signal resource corresponding to each fourth beam corresponding to each future time, where the reference signal resource is the reference signal resource in the second reference signal resource set; a beam quality corresponding to each fourth beam corresponding to each future time; or fourth indication information, where the fourth indication information indicates that beams contained in at least one group corresponding to at least one future time in group-based beam information output by the first AI model are two beams able to be simultaneously received and/or simultaneously sent by the terminal.

FIG. 4A is a flow chart of a communication method according to an embodiment of the present disclosure. As shown in FIG. 4A, an embodiment of the present disclosure relates to a communication method, which may be performed by a network device, and include the following steps.

In step S4101, first information is sent.

For optional implementations of step S4101, reference may be made to the optional implementations of step S2101 in FIG. 2A and other related parts in the embodiment involved in FIG. 2A, which are not repeated here.

In some embodiments, the network device may send the first information to a terminal, but the present disclosure is not limited to this, and the network device may also send the first information to other entities.

In step S4102, model performance monitoring data is obtained.

For optional implementations of step S4102, reference may be made to the optional implementations of step S2104 in FIG. 2A and other related parts in the embodiment involved in FIG. 2A, which are not repeated here.

In some embodiments, the network device may receive the model performance monitoring data sent by the terminal, but the present disclosure is not limited to this, and the network device may also receive the model performance monitoring data sent by other entities.

In some embodiments, the above steps are all optional steps.

FIG. 4B is a flow chart of a communication method according to an embodiment of the present disclosure. As shown in FIG. 4B, an embodiment of the present disclosure relates to a communication method, which may be performed by a network device, and include the following steps.

In step S4201, first information is sent.

For optional implementations of step S4201, reference may be made to the optional implementations of step S2101 in FIG. 2A and step S4101 in FIG. 4A, and other related parts in the embodiments involved in FIG. 2A and FIG. 4A, which are not repeated here.

In step S4202, model training data is obtained.

For optional implementations of step S4202, reference may be made to the optional implementations of step S2204 in FIG. 2A and other related parts in the embodiment involved in FIG. 2A, which are not repeated here.

In some embodiments, the above steps are all optional steps.

FIG. 4C is a flow chart of a communication method according to an embodiment of the present disclosure. As shown in FIG. 4C, an embodiment of the present disclosure relates to a communication method, which may be performed by a network device, and include the following steps.

In step S4301, first information is sent.

For optional implementations of step S4301, reference may be made to the optional implementations of step S2101 in FIG. 2A and step S4101 in FIG. 4A, and other related parts in the embodiments involved in FIG. 2A and FIG. 4A, which are not repeated here.

In step S4302, model input data is obtained.

For optional implementations of step S4302, reference may be made to the optional implementations of step S2304 in FIG. 2A and other related parts in the embodiment involved in FIG. 2A, which are not repeated here.

In some embodiments, the above steps are all optional steps.

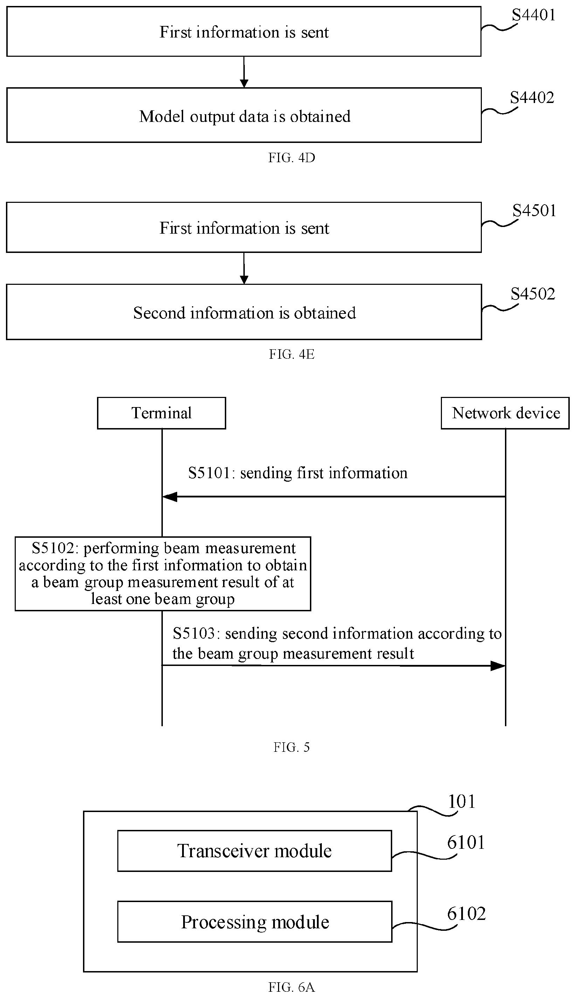

FIG. 4D is a flow chart of a communication method according to an embodiment of the present disclosure. As shown in FIG. 4D, an embodiment of the present disclosure relates to a communication method, which may be performed by a network device, and include the following steps.

In step S4401, first information is sent.

For optional implementations of step S4401, reference may be made to the optional implementations of step S2101 in FIG. 2A and step S4101 in FIG. 4A, and other related parts in the embodiments involved in FIG. 2A and FIG. 4A, which are not repeated here.

In step S4402, model output data is obtained.

For optional implementations of step S4402, reference may be made to the optional implementations of step S2404 in FIG. 2A and other related parts in the embodiment involved in FIG. 2A, which are not repeated here.

In some embodiments, the above steps are all optional steps.

FIG. 4E is a flow chart of a communication method according to an embodiment of the present disclosure. As shown in FIG. 4E, an embodiment of the present disclosure relates to a communication method, which may be performed by a network device, and include the following steps.

In step S4501, first information is sent.

For optional implementations of step S4501, reference may be made to the optional implementations of step S2101 in FIG. 2A and step S4101 in FIG. 4A, and other related parts in the embodiments involved in FIG. 2A and FIG. 4A, which are not repeated here.

In step S4502, second information is obtained.

For optional implementations of step S4502, reference may be made to the optional implementations of step S2104 of FIG. 2A, step S2204 of FIG. 2B, step S2304 of FIG. 2C, step S2404 of FIG. 2D, step S4104 of FIG. 4A, step S4204 of FIG. 4B, step S4304 of FIG. 4C, and step S4404 of FIG. 4D, as well as other related parts in the embodiments involved in FIGS. 2A, 2B, 2C, 2D, 4A, 4B, 4C and 4D, which are not repeated here.

In some embodiments, the at least one beam group each includes a first beam and a second beam, and the beam group measurement result is determined in the following manner: for each beam group, performing the beam measurement according to the first information to obtain a first beam measurement result of the first beam and a second beam measurement result of the second beam, and determining the beam group measurement result of the beam group according to the first beam measurement result and the second beam measurement result.

In some embodiments, determining the beam group measurement result of the beam group according to the first beam measurement result and the second beam measurement result includes at least one of: taking an average of the first beam measurement result and the second beam measurement result as the beam group measurement result; taking a weighted average of the first beam measurement result and the second beam measurement result as the beam group measurement result; or taking a sum of the first measurement result, the second measurement result, and a product of the first measurement result and the second measurement result as the beam group measurement result.

In some embodiments, the first information includes at least one of: a first reference signal resource set, where a reference signal resource in the first reference signal resource set corresponds to a beam to be measured; a second reference signal resource set, where a reference signal resource in the second reference signal resource set corresponds to a beam to be predicted; a third reference signal resource set, where the third reference signal resource set includes a resource for interference measurement; or a relationship between the first reference signal resource set and the second reference signal resource set.

In some embodiments, the first AI model is a model for performing spatial-domain beam prediction, and the relationship between the first reference signal resource set and the second reference signal resource set includes at least one of: the first reference signal resource set being a subset of the second reference signal resource set; or the beam corresponding to the first reference signal resource set being a wide beam, the beam corresponding to the second reference signal resource set being a narrow beam, and a beam coverage range corresponding to the first reference signal resource set being the same as a beam coverage range corresponding to the second reference signal resource set.

In some embodiments, the first AI model is a model for performing time-domain beam prediction, and the relationship between the first reference signal resource set and the second reference signal resource set includes at least one of: the first reference signal resource set being a subset of the second reference signal resource set; the first reference signal resource set being the same as the second reference signal resource set; or the beam corresponding to the first reference signal resource set being a wide beam, the beam corresponding to the second reference signal resource set being a narrow beam, and a beam coverage range corresponding to the first reference signal resource set being the same as a beam coverage range corresponding to the second reference signal resource set.

In some embodiments, the first reference signal resource set includes a plurality of fourth reference signal resource sets, and different fourth reference signal resource sets of the plurality of fourth reference signal resource sets correspond to different transmission reception points (TRPs); and the second reference signal resource set includes a plurality of fifth reference signal resource sets, and different fifth reference signal resource sets of the plurality of fifth reference signal resource sets correspond to different TRPs.

In some embodiments, the first AI model is a model for performing spatial-domain beam prediction, and a relationship between the fourth reference signal resource set and the fifth reference signal resource set includes at least one of: the fourth reference signal resource set being a subset of the fifth reference signal resource set; or a beam corresponding to the fourth reference signal resource set being a wide beam, a beam corresponding to the fifth reference signal resource set being a narrow beam, and a beam coverage range corresponding to the fourth reference signal resource set being the same as a beam coverage range corresponding to the fifth reference signal resource set.

In some embodiments, the first AI model is a model for performing time-domain beam prediction, and a relationship between the fourth reference signal resource set and the fifth reference signal resource set includes at least one of: the fourth reference signal resource set being a subset of the fifth reference signal resource set; the fourth reference signal resource set being the same as the fifth reference signal resource set; or a beam corresponding to the fourth reference signal resource set being a wide beam, a beam corresponding to the fifth reference signal resource set being a narrow beam, and a beam coverage range corresponding to the fourth reference signal resource set being the same as a beam coverage range corresponding to the fifth reference signal resource set.

In some embodiments, the second information includes at least one of: model training data; model performance monitoring data; model input data; or model output data.

In some embodiments, the model training data includes the model input data and a beam measurement result of the beam to be predicted.

In some embodiments, the model performance monitoring data includes at least one of: beam information of K beam groups; a performance value of the first AI model; first data, where the first data includes at least one of: model input data of the first AI model, model output data of the first AI model, or measurement data corresponding to the model output data, where the model output data is data output by the first AI model according to the model input data; a specified event, where the specified event is triggered based on a comparison result between the performance value of the first AI model and a first threshold value or a first offset value; or first operation information, where the first operation information indicates that a management operation is performed on the first AI model, where the management operation includes any one of: activating the first AI model, deactivating the first AI model, switching the first AI model, and not using an AI model.

In some embodiments, the K beam groups are best K beam groups, the best K beam groups are beam groups corresponding to best K beam group measurement results, and the best K beam group measurement results include first K beam group measurement results of at least one instance of the beam group measurement result arranged in a descending order.

In some embodiments, the beam information includes at least one of: an identifier of a reference signal resource corresponding to each beam in each best beam group; or a beam quality corresponding to the identifier of the reference signal resource.

In some embodiments, the performance value includes at least one of: a beam group prediction accuracy rate, where the beam group prediction accuracy rate is an accuracy rate of at least one predicted beam group including an actual best beam group; a beam group quality difference, where the beam group quality difference is a difference between a measured beam quality of a first beam group and a measured beam quality of a second beam group, where the first beam group is a beam group with a strongest predicted beam quality, and the second beam group is a beam group with a strongest measured beam quality; or a predicted beam group quality difference, where the predicted beam group quality difference is a difference between a predicted beam quality of the first beam group and a measured beam quality of the first beam group.

In some embodiments, the specified event includes at least one of: a first event, a second event, a third event, a fourth event, a fifth event or a sixth event; and receiving the second information sent by the terminal according to the beam group measurement result of the at least one beam group includes at least one of: receiving the first event sent by the terminal, where the first event is triggered in a case that the terminal determines that the beam group prediction accuracy rate is less than a first accuracy threshold according to the beam group measurement result; receiving the second event sent by the terminal, where the second event is triggered in a case that the terminal determines that the beam group prediction accuracy rate is greater than a second accuracy threshold according to the beam group measurement result; receiving the third event sent by the terminal, where the third event is triggered in a case that the terminal determines that the beam group quality difference is less than a first difference threshold according to the beam group measurement result; receiving the fourth event sent by the terminal, where the fourth event is triggered in a case that the terminal determines that the beam group quality difference is greater than a second difference threshold according to the beam group measurement result; receiving the fifth event sent by the terminal, where the fifth event is triggered in a case that the terminal determines that the predicted beam group quality difference is less than a third difference threshold according to the beam group measurement result; or receiving the sixth event sent by the terminal, where the sixth event is triggered in a case that the terminal determines that the predicted beam group quality difference is greater than a fourth difference threshold according to the beam group measurement result.

In some embodiments, the first operation information is determined by the terminal according to the model output data and the measurement data corresponding to the model output data.

In some embodiments, the first operation information includes activating the first AI model or deactivating the first AI model.

In some embodiments, the first AI model is a model for performing spatial-domain beam prediction, and the model input data includes at least one of: beam qualities of N beams corresponding to the first reference signal resource set, where the beam quality includes a layer 1-reference signal receiving power (L1-RSRP) or a layer 1-signal to interference plus noise ratio (L1-SINR), and N is a positive integer; identifiers of reference signal resources corresponding to N beams corresponding to the first reference signal resource set; or first indication information, where the first indication information indicates that beams contained in at least one group in group-based beam information output by the first AI model are two beams able to be simultaneously received and/or simultaneously sent by the terminal.

In some embodiments, the first AI model is a model for performing spatial-domain beam prediction, and the model output data includes at least one of: at least one group; identifiers of two reference signal resources corresponding to each group, where the reference signal resource is the reference signal resource in the second reference signal resource set; a beam quality corresponding to the identifier of each reference signal resource; at least one third beam; an identifier of a reference signal resource corresponding to each third beam, where the reference signal resource is the reference signal resource in the second reference signal resource set; a beam quality corresponding to each third beam; or second indication information, where the second indication information indicates that beams contained in at least one group in group-based beam information output by the first AI model are two beams able to be simultaneously received and/or simultaneously sent by the terminal.

In some embodiments, the first AI model is a model for performing time-domain beam prediction, and the model input data includes at least one of: at least one historical time; beam qualities of N beams corresponding to the first reference signal resource set corresponding to each historical time, where the beam quality includes an L1-RSRP or an L1-SINR, and N is a positive integer; identifiers of reference signal resources corresponding to N beams corresponding to the first reference signal resource set corresponding to each historical time; or third indication information, where the third indication information indicates that beams contained in at least one group in group-based beam information output by the first AI model are two beams able to be simultaneously received and/or simultaneously sent by the terminal.

In some embodiments, the first AI model is a model for performing time-domain beam prediction, and the model output data includes at least one of: at least one future time, where the at least one future time each is a time corresponding to a beam predicted by the first AI model; at least one group corresponding to each future time; identifiers of two reference signal resources corresponding to each group corresponding to each future time, where the reference signal resource is the reference signal resource in the second reference signal resource set; a beam quality corresponding to the identifier of each reference signal resource corresponding to each future time; at least one fourth beam corresponding to each future time; an identifier of a reference signal resource corresponding to each fourth beam corresponding to each future time, where the reference signal resource is the reference signal resource in the second reference signal resource set; a beam quality corresponding to each fourth beam corresponding to each future time; or fourth indication information, where the fourth indication information indicates that beams contained in at least one group corresponding to at least one future time in group-based beam information output by the first AI model are two beams able to be simultaneously received and/or simultaneously sent by the terminal.

FIG. 5 is a schematic interaction diagram of a communication method according to an embodiment of the present disclosure. As shown in FIG. 5, an embodiment of the present disclosure relates to a communication method, which may be performed by a communication system, and include the following steps.

In step S5101, a network device sends first information to a terminal.

For optional implementations of step S5101, reference may be made to the optional implementations of step S2101 in FIG. 2A, step S3101 in FIG. 3A and step S4101 in FIG. 4A, and other related parts in the embodiments involved in FIGS. 2A, 3A and 4A, which are not repeated here.

In step S5102, the terminal performs beam measurement according to the first information to obtain a beam group measurement result of at least one beam group.

For optional implementation of step S5102, reference may be made to the optional implementations of step S2102 in FIG. 2A and step S3102 in FIG. 3A, and other related parts in the embodiments involved in FIGS. 2A and 3A, which are not repeated here.

In step S5103, the terminal sends second information to the network device according to the beam group measurement result.

For optional implementations of step S5103, reference may be made to the optional implementations of step S2104 in FIG. 2A, step S2204 in FIG. 2B, step S2304 in FIG. 2C and step S2404 in FIG. 2D, and other related parts in the embodiments involved in FIGS. 2A, 2B, 2C and 2D, which are not repeated here.

In some embodiments, the above methods may include the methods described in the above embodiments of the communication system, terminal, network device, etc., which are not repeated here.

### Embodiment 1

In some embodiments, the first AI model is a model for performing spatial-domain beam prediction, and the input data of the first AI model may include at least one of: L1-RSRPs or L1-SINRs of beams in a beam set setB1 and a beam set setB2 (or, beam identifiers (IDs), i.e., reference signal resource IDs: SSB IDs or CSI-RS resource IDs, may also be added); L1-RSRPs or L1-SINRs of beams in a beam set setB (or, beam identifiers (IDs), i.e., reference signal resource IDs: SSB IDs or CSI-RS resource IDs, may also be added), where the beam set setB means that a beam set setB1 and a beam set setB2 are not distinguished, and the beam set setB1 and the beam set setB2 are mixed into one beam set setB; each reference signal resource in a beam set setBi being configured with one corresponding reference signal resource for measurement interference when the input data includes the L1-SINR; or two beams included in an output beam group (or beam pair) being expected to be two beams able to be simultaneously received and/or simultaneously sent by the terminal.

The beam sets setB1 and setB2 correspond to different reference signal resource sets, that is, correspond to different TRPs, the beam set setB1 and a beam set setA1 correspond to the same TRP, and the beam set setB2 and a beam set setA2 correspond to the same TRP.

The relationship between the beam set setBi and a beam set setAi may include at least one of: the beam set setBi being a subset of the beam set setAi; or a beam in the beam set setBi being a wide beam and a beam in the beam set setAi being a narrow beam (one wide beam in the beam set setBi covering multiple narrow beams in the beam set setAi).

When the beam set setB is not divided into the beam set setB1 and the beam set setB2, a beam set setA is also not divided into the beam set setA1 and the beam set setA2.

In some embodiments, the beam may be beam, QCL Type D, spatial setting, spatial filter, spatial relation information, or transmission configuration indication (TCI) state.

In some embodiments, the first AI model is a model for performing spatial-domain beam prediction, and the output data of the first AI model may include at least one of: N beam pairs (beam groups), and IDs of two reference signal resources corresponding to each beam pair, where the two reference signal resources include two resources of the beam set setA, or include one resource of the beam set setA1 and one resource of the beam set setA2; N beam pairs, IDs of two reference signal resources corresponding to each beam pair, and an L1-SINR corresponding to the ID of each reference signal resource; M beams, that is, no other beam is found to form a pair with each of the M beams, so that each beam is reported as a single beam; or an L1-SINR corresponding to the beam.

In some embodiments, when the first AI model is a model for performing time-domain beam prediction, the input data of the first AI model, compared with the input data of the first AI model used to perform spatial-domain beam prediction, further includes multiple historical times, and one instance of the input data of the first AI model when the first AI model is used to perform spatial-domain beam prediction is included at each historical time. When beam set setBi<beam set setAi, that is, when the beam set setBi is a subset of the beam set setAi, the beam sets setBi at multiple historical times remains unchanged, or the beams contained in the beam sets setBi at multiple historical times are different, for example, multiple beam sets setBi may be integrated into one beam set setAi.

In some embodiments, when the first AI model is a model for performing time-domain beam prediction, the relationship between the beam set setBi and the beam set setAi may also include that the beam set setBi is the same as the beam set setAi.

In some embodiments, when the first AI model is a model for performing time-domain beam prediction, the output data of the first AI model, compared with the output data of the first AI model used to perform spatial-domain beam prediction, further includes multiple future times, and one instance of the output data of the first AI model when the first AI model is used to perform spatial-domain beam prediction is included at each future time.

### Embodiment 2

In some embodiments, the terminal may receive first information sent by the network device, determine a reference signal resource based on the first information, obtain a first report, and send the first report to the network device.

In some embodiments, the first report may be obtained based on measurement, and the first report includes information of K beam groups.

In some embodiments, the information of the K beam groups may be information of best K beam groups.

In some embodiments, the best beam group may be determined based on an L1-SINR of the beam group, and the L1-SINR of the beam group may be determined according to L1-SINRs corresponding to two beams in the beam group. The specific determination methods may include: (1) an average of the L1-SINRs corresponding to the two beams in the beam group may be used as the L1-SINR of the beam group; (2) a weighted average of the L1-SINRs corresponding to the two beams in the beam group may be used as the L1-SINR of the beam group; for example, the beam with a larger L1-SINR may account for a larger proportion, and the maximum proportion may be 1, that is, the L1-SINR of the beam group is the larger L1-SINR; alternatively, the beam with a smaller L1-SINR may account for a larger proportion, and the maximum proportion may be 1, that is, the L1-SINR of the beam group is the smaller L1-SINR; and (3) the L1-SINR of the beam group is determined according to the Shannon capacity formula: log2(1+SINR-group)=log2(1+SINR#1)+log2(1+SINR#2), where SINR#1 and SINR#2 are the L1-SINRs of the two beams in the beam group, respectively. Therefore, SINR-group=SINR#1+SINR#2+SINR#1*SINR#2, where SINR-group is the L1-SINR of the beam group.

In some embodiments, the information of the K beam groups may include at least one of: identifiers of reference signal resources corresponding to two beams in each group; or an L1-SINR corresponding to the identifier of each reference signal resource.

### Embodiment 3 (based on Embodiment 2)

In some embodiments, the first report may further include model performance monitoring data, and the model performance monitoring data may include data used to calculate a performance metric, or a calculated performance metric, or an event triggered based on a comparison of a performance metric with a threshold, or an operation decision made for model management (deactivating the model or activating the model or switching the model or falling back to a non-AI mode).

### Embodiment 4 (based on Embodiment 3)

In some embodiments, the performance metric used for model performance monitoring may include at least one of: a beam group prediction accuracy rate; a beam group L1-SINR difference; or a beam group predicted L1-SINR difference.

In some embodiments, the beam group prediction accuracy rate may be an accuracy rate of an actual best beam group being included in predicted K beam groups.

In some embodiments, the beam group L1-SINR difference may be a difference between an actual L1-SINR of a predicted best beam group and an actual L1-SINR of an actual best beam group.

In some embodiments, the beam group predicted L1-SINR difference may be a difference between an actual L1-SINR of a predicted best beam group and a predicted L1-SINR of the predicted best beam group.

In some embodiments, the L1-SINR of the beam group may be determined by at least one of the above methods (1) to (3).

### Embodiment 5 (based on Embodiment 3)

In some embodiments, the data used to calculate the performance metric for model performance monitoring may include at least one of the following: when the model is on the side of the terminal, the terminal needs to report a predicted value output by the model and a measured value corresponding to each predicted value. For the output predicted value, reference may be made to the description of the model output data in the embodiment shown in FIG. 2A, and each output value corresponds to one measured value; or, when the model is on the side of the network device, the value output by the model is on the side of the network device, so that the terminal only needs to report the measured value corresponding to each predicted value output by the model. In addition, for the input of the model on the side of the network device, the terminal also needs to report the input data of the model, but the input data of the model and the measured value used for model performance monitoring may be in one report (performance monitoring report) or in different reports.

### Embodiment 6 (based on Embodiment 3 or 4)

In some embodiments, the terminal may report the event triggered based on the performance metric.

The network device configures events. For example, event 1 is triggered when the Top-1 beam group prediction accuracy rate is lower than 80%; event 2 is triggered when the Top-1 beam group prediction accuracy rate is higher than 90%; event 3 is triggered when the beam group L1-SINR difference is lower than 1dB; event 4 is triggered when the beam group L1-SINR difference is higher than 3dB... Therefore, the terminal may determine whether to trigger the event and which event to trigger based on the predicted value output by the model on the side of the terminal and the actual measured value, then report the corresponding event ID, and may further report the value of the corresponding performance metric triggering the event.

### Embodiment 7 (based on Embodiment 3)

In some embodiments, the terminal may make a judgment based on the predicted value of the model on the side of the terminal and the actual measured value, to judge whether it is necessary to activate or deactivate or switch the AI model or function (the above AI model performance monitoring may be the performance monitoring based the model or function), and inform the network device of the decision of the terminal.

In some embodiments, in a case that the model is in an active state and it is found that the model has a poor performance, the model is deactivated.

In some embodiments, in a case that the model is in an inactive state and it is found that the model has a good performance, the model is activated.

### Embodiment 8 (based on Embodiment 2)

In some embodiments, the reference signal resource configuration information may include reference signal resources in the beam sets setB and setA. In a case that different TRPs are distinguished, the reference signal resource configuration information may include reference signal resources in the beam set setB1, the beam set setB2, the beam set setA1, and the beam set setA2. In a case that the beam set setB is a subset of the beam set setA, the reference signal resource configuration information may only include the reference signal resources of the beam set setA. In a case that the beam set setBi is a subset of the beam set setAi, the reference signal resource configuration information may only include reference signal resources of the beam set setAi. In a case that the input data and output data of the first AI model are the L1-SINR, the reference signal resource configuration information further includes reference signal resources for interference measurement corresponding to the beam sets setB and setA.

### Embodiment 9 (based on Embodiment 2)

In some embodiments, the first report may be obtained based on measurement, the first report may be used for model training, the first report may further include model input, and the model input is also obtained based on measurement.

### Embodiment 10 (based on Embodiment 2)

In some embodiments, the first report may be obtained based on model output, that is, the first report is the output of the model on the side of the terminal, and the input is obtained based on measurement.

In some embodiments of the present disclosure, a communication system is provided, and the communication system may include a terminal and a network device, where the terminal may perform the communication method performed by the terminal in the aforementioned embodiments of the present disclosure; and the network device may perform the communication method performed by the network device in the aforementioned embodiments of the present disclosure.

Embodiments of the present disclosure also provide a device for implementing any of the above methods. For example, a device is provided, and the device includes a unit or module for implementing each step performed by the terminal in any of the above methods. For another example, another device is also provided, and the device includes a unit or module for implementing each step performed by the network device (such as an access network device, a core network function node, a core network device, etc.) in any of the above methods.

It should be understood that the division of units or modules in the above device is only a division of logical functions. In actual implementation, they may be fully or partially integrated into one physical entity, or may be physically separated. In addition, the units or modules in the device may be implemented in the form of a processor calling software. For example, the device includes a processor, the processor is connected to a memory, the memory stores instructions, and the processor calls the instructions stored in the memory to implement any one of the above methods or the functions of the units or modules of the above device. The processor is, for example, a general-purpose processor, such as a central processing unit (CPU) or a microprocessor, and the memory is a memory inside the device or a memory outside the device. Alternatively, the units or modules in the device may be implemented in the form of a hardware circuit. The functions of some or all units or modules may be implemented by designing the hardware circuit. The hardware circuit may be understood as one or more processors. For example, in an implementation, the hardware circuit is an application-specific integrated circuit (ASIC), and the functions of some or all units or modules above are implemented by designing a logical relationship of components in the circuit. As another example, in another implementation, the hardware circuit may be implemented by a programmable logic device (PLD). Taking a field programmable gate array (FPGA) as an example, it may include a large number of logic gate circuits, and a connection relationship between the logic gate circuits is configured through configuration files, thereby implementing the functions of some or all units or modules above. All units or modules of the above device may be fully implemented in the form of the processor calling software, or fully implemented in the form of the hardware circuit, or partially implemented in the form of the processor calling software and partially implemented in the form of the hardware circuit.

In the embodiments of the present disclosure, a processor is a circuit with a signal processing capability. In an implementation, the processor may be a circuit with a capability to read and run instructions, such as a central processing unit (CPU), a microprocessor, a graphics processing unit (GPU) (which may be understood as a microprocessor), or a digital signal processor (DSP), etc. In another implementation, the processor may implement certain functions through a logical relationship of a hardware circuit. The logical relationship of the hardware circuit is fixed or reconfigurable. For example, the processor is a hardware circuit implemented by an application-specific integrated circuit (ASIC) or a programmable logic device (PLD), such as a field-programmable gate array (FPGA). In a reconfigurable hardware circuit, a process of the processor loading configuration files to implement hardware circuit configuration may be understood as a process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

FIG. 6A is a block diagram of a terminal according to an embodiment of the present disclosure. As shown in FIG. 6A, the terminal 101 may include at least one of a transceiver module 6101, a processing module 6102, etc. In some embodiments, the transceiver module 6101 is configured to receive first information sent by a network device, the first information includes configuration of a reference signal resource, and the reference signal resource is used for the terminal to perform beam measurement; the processing module 6102 is configured to perform the beam measurement according to the first information to obtain a beam group measurement result of at least one beam group; the processing module 6102 is further configured to send second information to the network device according to the beam group measurement result, the second information includes information related to a first AI model, and the first AI model is a model for performing beam prediction. Optionally, the transceiver module 6101 may be used to perform at least one of the communication steps such as sending and/or receiving steps performed by the terminal 101 in any of the above methods (for example, step S2101, step S3101, but not limited to these), which are not repeated here. Optionally, the processing module 6102 may be used to perform at least one of the other steps (for example, step S2102, step S2103, but not limited to these) performed by the terminal 101 in any of the above methods, which are not repeated here.

In some embodiments, the transceiver module may include a transmitting (sending) module and/or a receiving module, and the transmitting module and the receiving module may be separate or integrated. Optionally, the transceiver module and the transceiver may be used interchangeably.

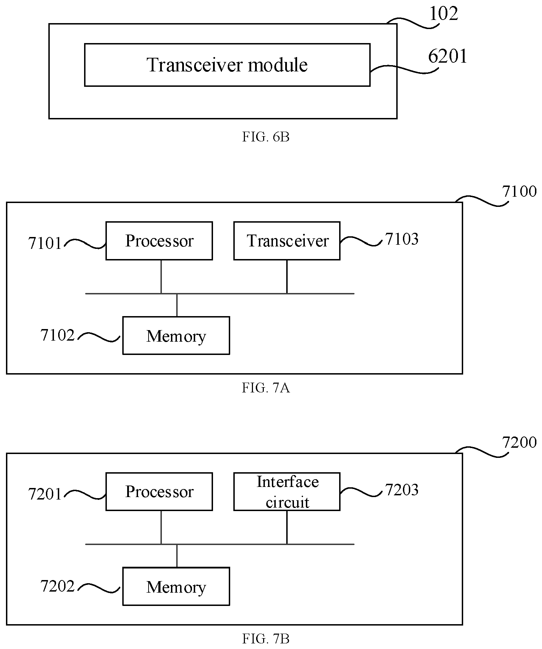

FIG. 6B is a block diagram of a network device according to an embodiment of the present disclosure. As shown in FIG. 6B, the network device 102 may include: at least one of a transceiver module 6201, a processing module 6202, etc. In some embodiments, the transceiver module 6201 is configured to send first information to a terminal, the first information includes configuration of a reference signal resource, and the reference signal resource is used for the terminal to perform beam measurement; the transceiver module 6201 is further configured to receive second information sent by the terminal according to a beam group measurement result of at least one beam group, the beam group measurement result is obtained by the terminal performing the beam measurement according to the first information, the second information includes information related to a first AI model, and the first AI model is a model for performing beam prediction. Optionally, the transceiver module 6201 may be used to perform at least one of the communication steps such as sending and/or receiving steps performed by the network device 102 in any of the above methods (for example, step S4101, but not limited to this), which are not repeated here.

In some embodiments, the transceiver module may include a transmitting (sending) module and/or a receiving module, and the transmitting module and the receiving module may be separate or integrated. Optionally, the transceiver module and the transceiver may be used interchangeably.

In some embodiments, the processing module may be one module or include multiple submodules. Optionally, the multiple submodules perform all or part of the steps required to be performed by the processing module. Optionally, the processing module and the processor may be used interchangeably.

FIG. 7A is a block diagram of a communication device 7100 according to an embodiment of the present disclosure. The communication device 7100 may be a network device (e.g., an access network device, a core network device, etc.), or a terminal (e.g., user equipment, etc.), or a chip, chip system, or processor that supports the network device to implement any of the above methods, or a chip, chip system, or processor that supports the terminal to implement any of the above methods. The communication device 7100 may be used to implement the methods described in the above method embodiments, and for details, reference may be made to the description in the above method embodiments.

As shown in FIG. 7A, the communication device 7100 includes one or more processors 7101. The processor 7101 may be a general-purpose processor or a dedicated processor, for example, a baseband processor or a central processing unit. The baseband processor may be used to process the communication protocol and the communication data, and the central processing unit may be used to control the communication device (such as a base station, a baseband chip, an IoT device, an IoT device chip, a DU or a CU, etc.), execute programs, and process the data of the programs. The communication device 7100 is used to perform any of the above methods.

In some embodiments, the communication device 7100 further includes one or more memories 7102 for storing instructions. Optionally, all or part of the memories 7102 may also be arranged outside the communication device 7100.

In some embodiments, the communication device 7100 further includes one or more transceivers 7103. When the communication device 7100 includes one or more transceivers 7103, the transceiver 7103 performs at least one of the communication steps such as sending and/or receiving steps in the above methods (for example, step S2101, step S4101, but not limited to these), and the processor 7101 performs at least one of the other steps (for example, step S2102, but not limited to this).

In some embodiments, the transceiver may include a receiver and/or a transmitter, and the receiver and the transmitter may be separate or integrated. Optionally, the terms such as transceiver, transceiving unit, transceiving machine, transceiving circuit, etc. may be used interchangeably, the terms such as transmitter, transmitting unit, transmitting machine, transmitting circuit, etc. may be used interchangeably, and the terms such as receiver, receiving unit, receiving machine, receiving circuit, etc. may be used interchangeably.

In some embodiments, the communication device 7100 may include one or more interface circuits. Optionally, the interface circuit is connected to the memory 7102, and the interface circuit may be used to receive signals from the memory 7102 or other devices, and may be used to send signals to the memory 7102 or other devices. For example, the interface circuit may read the instructions stored in the memory 7102 and send the instructions to the processor 7101.

The communication device 7100 described in the above embodiments may be a network device or a terminal, but the scope of the communication device 7100 described in the present disclosure is not limited to this, and the structure of the communication device 7100 may not be limited by FIG. 7A. The communication device may be an independent device or may be part of a large device. For example, the communication device may be: (1) an independent integrated circuit (IC), or a chip, or a chip system or subsystem; (2) a set of one or more ICs, optionally, the above set of ICs may also include a storage component for storing data and programs; (3) an ASIC, such as a modem; (4) a module that may be embedded in other devices; (5) a receiver, an IoT device, an intelligent IoT device, a cellular phone, a wireless device, a handheld device, a mobile unit, a vehicle-mounted device, a network device, a cloud device, an artificial intelligence device, etc.; (6) others, etc.

FIG. 7B is a block diagram of a chip 7200 according to an embodiment of the present disclosure. In a case that the communication device 7100 may be a chip or a chip system, reference may be made to the block diagram of the chip 7200 shown in FIG. 7B, but the present disclosure is not limited to this.

The chip 7200 includes one or more processors 7201, and the chip 7200 is used to perform any of the above methods.

In some embodiments, the chip 7200 further includes one or more interface circuits 7203. Optionally, the interface circuit 7203 is connected to the memory 7202, and the interface circuit 7203 may be used to receive signals from the memory 7202 or other devices, and the interface circuit 7203 may be used to send signals to the memory 7202 or other devices. For example, the interface circuit 7203 may read instructions stored in the memory 7202 and send the instructions to the processor 7201.

In some embodiments, the interface circuit 7203 performs at least one of the communication steps such as sending and/or receiving steps in the above method (for example, step S2101, step S4101, but not limited to these), and the processor 7201 performs at least one of the other steps (for example, step S2102, but not limited to this).

In some embodiments, the terms such as interface circuit, interface, transceiver pin, and transceiver may be used interchangeably.

In some embodiments, the chip 7200 further includes one or more memories 7202 for storing instructions. Optionally, all or part of the memories 7202 may be arranged outside the chip 7200.

Embodiments of the present disclosure further provide a storage medium, on which instructions are stored, and when the instructions are executed on the communication device 7100, the communication device 7100 is caused to perform any of the above methods. Optionally, the storage medium is an electronic storage medium. Optionally, the storage medium is a computer-readable storage medium, but is not limited to this, and it may also be a storage medium readable by other devices. Optionally, the storage medium may be a non-transitory storage medium, but is not limited to this, and it may also be a temporary storage medium.

Embodiments of the present disclosure further provide a program product, and when the program product is executed by the communication device 7100, the communication device 7100 performs any of the above methods. Optionally, the program product may be a computer program product.

Embodiments of the present disclosure further provide a computer program, which, when executed on a computer, causes the computer to perform any of the above methods.

## Claims

1. A communication method, performed by a terminal, and comprising:
receiving first information sent by a network device, wherein the first information comprises configuration of a reference signal resource, and the reference signal resource is configured for the terminal to perform beam measurement;
obtaining a beam group measurement result of at least one beam group by performing the beam measurement according to the first information; and
sending second information to the network device according to the beam group measurement result, wherein the second information comprises information related to a first artificial intelligence (AI) model, and the first AI model is a model for performing beam prediction.

2. The method according to claim 1, wherein the at least one beam group each comprises a first beam and a second beam, and obtaining the beam group measurement result of the at least one beam group by performing the beam measurement according to the first information comprises:
for each beam group, obtaining a first beam measurement result of the first beam and a second beam measurement result of the second beam by performing the beam measurement according to the first information, and determining the beam group measurement result of the beam group according to the first beam measurement result and the second beam measurement result.

3. The method according to claim 2, wherein determining the beam group measurement result of the beam group according to the first beam measurement result and the second beam measurement result comprises at least one of:
taking an average of the first beam measurement result and the second beam measurement result as the beam group measurement result;
taking a weighted average of the first beam measurement result and the second beam measurement result as the beam group measurement result; or
taking a sum of the first measurement result, the second measurement result, and a product of the first measurement result and the second measurement result as the beam group measurement result.

4. The method according to any one of claims 1 to 3, wherein the first information comprises at least one of:
a first reference signal resource set, wherein a reference signal resource in the first reference signal resource set corresponds to a beam to be measured;
a second reference signal resource set, wherein a reference signal resource in the second reference signal resource set corresponds to a beam to be predicted;
a third reference signal resource set, wherein the third reference signal resource set comprises a resource for interference measurement; or
a relationship between the first reference signal resource set and the second reference signal resource set.

5. The method according to claim 4, wherein the first AI model is a model for performing spatial-domain beam prediction, and the relationship between the first reference signal resource set and the second reference signal resource set comprises at least one of:
the first reference signal resource set being a subset of the second reference signal resource set; or
the beam corresponding to the first reference signal resource set being a wide beam, the beam corresponding to the second reference signal resource set being a narrow beam, and a beam coverage range corresponding to the first reference signal resource set being the same as a beam coverage range corresponding to the second reference signal resource set.

6. The method according to claim 4, wherein the first AI model is a model for performing time-domain beam prediction, and the relationship between the first reference signal resource set and the second reference signal resource set comprises at least one of:
the first reference signal resource set being a subset of the second reference signal resource set;
the first reference signal resource set being the same as the second reference signal resource set; or
the beam corresponding to the first reference signal resource set being a wide beam, the beam corresponding to the second reference signal resource set being a narrow beam, and a beam coverage range corresponding to the first reference signal resource set being the same as a beam coverage range corresponding to the second reference signal resource set.

7. The method according to any one of claims 4 to 6, wherein
the first reference signal resource set comprises a plurality of fourth reference signal resource sets, and different fourth reference signal resource sets of the plurality of fourth reference signal resource sets correspond to different transmission reception points (TRPs); and
the second reference signal resource set comprises a plurality of fifth reference signal resource sets, and different fifth reference signal resource sets of the plurality of fifth reference signal resource sets correspond to different TRPs.

8. The method according to claim 7, wherein the first AI model is a model for performing spatial-domain beam prediction, and a relationship between the fourth reference signal resource set and the fifth reference signal resource set comprises at least one of:
the fourth reference signal resource set being a subset of the fifth reference signal resource set; or
a beam corresponding to the fourth reference signal resource set being a wide beam, a beam corresponding to the fifth reference signal resource set being a narrow beam, and a beam coverage range corresponding to the fourth reference signal resource set being the same as a beam coverage range corresponding to the fifth reference signal resource set.

9. The method according to claim 7, wherein the first AI model is a model for performing time-domain beam prediction, and a relationship between the fourth reference signal resource set and the fifth reference signal resource set comprises at least one of:
the fourth reference signal resource set being a subset of the fifth reference signal resource set;
the fourth reference signal resource set being the same as the fifth reference signal resource set; or
a beam corresponding to the fourth reference signal resource set being a wide beam, a beam corresponding to the fifth reference signal resource set being a narrow beam, and a beam coverage range corresponding to the fourth reference signal resource set being the same as a beam coverage range corresponding to the fifth reference signal resource set.

10. The method according to any one of claims 4 to 9, wherein the second information comprises at least one of:
model training data;
model performance monitoring data;
model input data; or
model output data.

11. The method according to claim 10, wherein the model training data comprises the model input data and a beam measurement result of the beam to be predicted.

12. The method according to claim 10 or 11, wherein the model performance monitoring data comprises at least one of:
beam information of K beam groups;
a performance value of the first AI model;
first data, wherein the first data comprises at least one of: model input data of the first AI model, model output data of the first AI model, or measurement data corresponding to the model output data, wherein the model output data is data output by the first AI model according to the model input data;
a specified event, wherein the specified event is triggered based on a comparison result between the performance value of the first AI model and a first threshold value or a first offset value; or
first operation information, wherein the first operation information indicates that a management operation is performed on the first AI model, wherein the management operation comprises any one of: activating the first AI model, deactivating the first AI model, switching the first AI model, and not using an AI model.

13. The method according to claim 12, further comprising:
determining the K beam groups from the at least one beam group according to the beam group measurement result.

14. The method according to claim 13, wherein the K beam groups are best K beam groups, and determining the K beam groups from the at least one beam group according to the beam group measurement result comprises:
taking beam groups corresponding to best K beam group measurement results as the best K beam groups, wherein the best K beam group measurement results comprise first K beam group measurement results of at least one instance of the beam group measurement result arranged in a descending order.

15. The method according to any one of claims 12 to 14, wherein the beam information comprises at least one of:
an identifier of a reference signal resource corresponding to each beam in each best beam group; or
a beam quality corresponding to the identifier of the reference signal resource.

16. The method according to any one of claims 12 to 15, wherein the performance value comprises at least one of:
a beam group prediction accuracy rate, wherein the beam group prediction accuracy rate is an accuracy rate of at least one predicted beam group comprising an actual best beam group;
a beam group quality difference, wherein the beam group quality difference is a difference between a measured beam quality of a first beam group and a measured beam quality of a second beam group, wherein the first beam group is a beam group with a strongest predicted beam quality, and the second beam group is a beam group with a strongest measured beam quality; or
a predicted beam group quality difference, wherein the predicted beam group quality difference is a difference between a predicted beam quality of the first beam group and a measured beam quality of the first beam group.

17. The method according to claim 16, wherein the specified event comprises at least one of: a first event, a second event, a third event, a fourth event, a fifth event or a sixth event; and sending the second information to the network device according to the beam group measurement result comprises at least one of:
determining that the beam group prediction accuracy rate is less than a first accuracy threshold according to the beam group measurement result, and sending the first event to the network device;
determining that the beam group prediction accuracy rate is greater than a second accuracy threshold according to the beam group measurement result, and sending the second event to the network device;
determining that the beam group quality difference is less than a first difference threshold according to the beam group measurement result, and sending the third event to the network device;
determining that the beam group quality difference is greater than a second difference threshold according to the beam group measurement result, and sending the fourth event to the network device;
determining that the predicted beam group quality difference is less than a third difference threshold according to the beam group measurement result, and sending the fifth event to the network device; or
determining that the predicted beam group quality difference is greater than a fourth difference threshold according to the beam group measurement result, and sending the sixth event to the network device.

18. The method according to any one of claims 12 to 17, wherein sending the second information to the network device according to the beam group measurement result comprises:
determining the model output data and the measurement data corresponding to the model output data according to the beam group measurement result;
determining the first operation information according to the model output data and the measurement data corresponding to the model output data; and
sending the first operation information to the network device.

19. The method according to claim 18, wherein determining the first operation information according to the model output data and the measurement data corresponding to the model output data comprises:
the first AI model being in an inactive state, determining that a performance of the first AI model meets a performance requirement according to the model output data and the measurement data corresponding to the model output data, and determining that the first operation information is activating the first AI model; or
the first AI model being in an active state, determining that a performance of the first AI model does not meet a performance requirement according to the model output data and the measurement data corresponding to the model output data, and determining that the first operation information is deactivating the first AI model.

20. The method according to any one of claims 10 to 19, wherein the first AI model is a model for performing spatial-domain beam prediction, and the model input data comprises at least one of:
beam qualities of N beams corresponding to the first reference signal resource set, wherein the beam quality comprises a layer 1-reference signal receiving power (L1-RSRP) or a layer 1-signal to interference plus noise ratio (L1-SINR), and N is a positive integer;
identifiers of reference signal resources corresponding to N beams corresponding to the first reference signal resource set; or
first indication information, wherein the first indication information indicates that beams contained in at least one group in group-based beam information output by the first AI model are two beams able to be simultaneously received and/or simultaneously sent by the terminal.

21. The method according to any one of claims 10 to 20, wherein the first AI model is a model for performing spatial-domain beam prediction, and the model output data comprises at least one of:
at least one group;
identifiers of two reference signal resources corresponding to each group, wherein the reference signal resource is the reference signal resource in the second reference signal resource set;
a beam quality corresponding to the identifier of each reference signal resource;
at least one third beam;
an identifier of a reference signal resource corresponding to each third beam, wherein the reference signal resource is the reference signal resource in the second reference signal resource set;
a beam quality corresponding to each third beam; or
second indication information, wherein the second indication information indicates that beams contained in at least one group in group-based beam information output by the first AI model are two beams able to be simultaneously received and/or simultaneously sent by the terminal.

22. The method according to any one of claims 10 to 19, wherein the first AI model is a model for performing time-domain beam prediction, and the model input data comprises at least one of:
at least one historical time;
beam qualities of N beams corresponding to the first reference signal resource set corresponding to each historical time, wherein the beam quality comprises an L1-RSRP or an L1-SINR, and N is a positive integer;
identifiers of reference signal resources corresponding to N beams corresponding to the first reference signal resource set corresponding to each historical time; or
third indication information, wherein the third indication information indicates that beams contained in at least one group in group-based beam information output by the first AI model are two beams able to be simultaneously received and/or simultaneously sent by the terminal.

23. The method according to any one of claims 10 to 19, wherein the first AI model is a model for performing time-domain beam prediction, and the model output data comprises at least one of:
at least one future time, wherein the at least one future time each is a time corresponding to a beam predicted by the first AI model;
at least one group corresponding to each future time;
identifiers of two reference signal resources corresponding to each group corresponding to each future time, wherein the reference signal resource is the reference signal resource in the second reference signal resource set;
a beam quality corresponding to the identifier of each reference signal resource corresponding to each future time;
at least one fourth beam corresponding to each future time;
an identifier of a reference signal resource corresponding to each fourth beam corresponding to each future time, wherein the reference signal resource is the reference signal resource in the second reference signal resource set;
a beam quality corresponding to each fourth beam corresponding to each future time; or
fourth indication information, wherein the fourth indication information indicates that beams contained in at least one group corresponding to at least one future time in group-based beam information output by the first AI model are two beams able to be simultaneously received and/or simultaneously sent by the terminal.

24. A communication method, performed by a network device, and comprising:
sending first information to a terminal, wherein the first information comprises configuration of a reference signal resource, and the reference signal resource is configured for the terminal to perform beam measurement; and
receiving second information sent by the terminal according to a beam group measurement result of at least one beam group, wherein the beam group measurement result is obtained by the terminal performing the beam measurement according to the first information, the second information comprises information related to a first artificial intelligence (AI) model, and the first AI model is a model for performing beam prediction.

25. The method according to claim 24, wherein the at least one beam group each comprises a first beam and a second beam, and the beam group measurement result is determined in the following manner:
for each beam group, obtaining a first beam measurement result of the first beam and a second beam measurement result of the second beam by performing the beam measurement according to the first information, and determining the beam group measurement result of the beam group according to the first beam measurement result and the second beam measurement result.

26. The method according to claim 25, wherein determining the beam group measurement result of the beam group according to the first beam measurement result and the second beam measurement result comprises at least one of:
taking an average of the first beam measurement result and the second beam measurement result as the beam group measurement result;
taking a weighted average of the first beam measurement result and the second beam measurement result as the beam group measurement result; or
taking a sum of the first measurement result, the second measurement result, and a product of the first measurement result and the second measurement result as the beam group measurement result.

27. The method according to any one of claims 24 to 26, wherein the first information comprises at least one of:
a first reference signal resource set, wherein a reference signal resource in the first reference signal resource set corresponds to a beam to be measured;
a second reference signal resource set, wherein a reference signal resource in the second reference signal resource set corresponds to a beam to be predicted;
a third reference signal resource set, wherein the third reference signal resource set comprises a resource for interference measurement; or
a relationship between the first reference signal resource set and the second reference signal resource set.

28. The method according to claim 27, wherein the first AI model is a model for performing spatial-domain beam prediction, and the relationship between the first reference signal resource set and the second reference signal resource set comprises at least one of:
the first reference signal resource set being a subset of the second reference signal resource set; or
the beam corresponding to the first reference signal resource set being a wide beam, the beam corresponding to the second reference signal resource set being a narrow beam, and a beam coverage range corresponding to the first reference signal resource set being the same as a beam coverage range corresponding to the second reference signal resource set.

29. The method according to claim 27, wherein the first AI model is a model for performing time-domain beam prediction, and the relationship between the first reference signal resource set and the second reference signal resource set comprises at least one of:
the first reference signal resource set being a subset of the second reference signal resource set;
the first reference signal resource set being the same as the second reference signal resource set; or
the beam corresponding to the first reference signal resource set being a wide beam, the beam corresponding to the second reference signal resource set being a narrow beam, and a beam coverage range corresponding to the first reference signal resource set being the same as a beam coverage range corresponding to the second reference signal resource set.

30. The method according to any one of claims 27 to 29, wherein
the first reference signal resource set comprises a plurality of fourth reference signal resource sets, and different fourth reference signal resource sets of the plurality of fourth reference signal resource sets correspond to different transmission reception points (TRPs); and
the second reference signal resource set comprises a plurality of fifth reference signal resource sets, and different fifth reference signal resource sets of the plurality of fifth reference signal resource sets correspond to different TRPs.

31. The method according to claim 30, wherein the first AI model is a model for performing spatial-domain beam prediction, and a relationship between the fourth reference signal resource set and the fifth reference signal resource set comprises at least one of:
the fourth reference signal resource set being a subset of the fifth reference signal resource set; or
a beam corresponding to the fourth reference signal resource set being a wide beam, a beam corresponding to the fifth reference signal resource set being a narrow beam, and a beam coverage range corresponding to the fourth reference signal resource set being the same as a beam coverage range corresponding to the fifth reference signal resource set.

32. The method according to claim 30, wherein the first AI model is a model for performing time-domain beam prediction, and a relationship between the fourth reference signal resource set and the fifth reference signal resource set comprises at least one of:
the fourth reference signal resource set being a subset of the fifth reference signal resource set;
the fourth reference signal resource set being the same as the fifth reference signal resource set; or
a beam corresponding to the fourth reference signal resource set being a wide beam, a beam corresponding to the fifth reference signal resource set being a narrow beam, and a beam coverage range corresponding to the fourth reference signal resource set being the same as a beam coverage range corresponding to the fifth reference signal resource set.

33. The method according to any one of claims 27 to 32, wherein the second information comprises at least one of:
model training data;
model performance monitoring data;
model input data; or
model output data.

34. The method according to claim 33, wherein the model training data comprises the model input data and a beam measurement result of the beam to be predicted.

35. The method according to claim 33 or 34, wherein the model performance monitoring data comprises at least one of:
beam information of K beam groups;
a performance value of the first AI model;
first data, wherein the first data comprises at least one of: model input data of the first AI model, model output data of the first AI model, or measurement data corresponding to the model output data, wherein the model output data is data output by the first AI model according to the model input data;
a specified event, wherein the specified event is triggered based on a comparison result between the performance value of the first AI model and a first threshold value or a first offset value; or
first operation information, wherein the first operation information indicates that a management operation is performed on the first AI model, wherein the management operation comprises any one of: activating the first AI model, deactivating the first AI model, switching the first AI model, and not using an AI model.

36. The method according to claim 35, wherein the K beam groups are best K beam groups, the best K beam groups are beam groups corresponding to best K beam group measurement results, and the best K beam group measurement results comprise first K beam group measurement results of at least one instance of the beam group measurement result arranged in a descending order.

37. The method according to claim 35 or 36, wherein the beam information comprises at least one of:
an identifier of a reference signal resource corresponding to each beam in each best beam group; or
a beam quality corresponding to the identifier of the reference signal resource.

38. The method according to any one of claims 35 to 37, wherein the performance value comprises at least one of:
a beam group prediction accuracy rate, wherein the beam group prediction accuracy rate is an accuracy rate of at least one predicted beam group comprising an actual best beam group;
a beam group quality difference, wherein the beam group quality difference is a difference between a measured beam quality of a first beam group and a measured beam quality of a second beam group, wherein the first beam group is a beam group with a strongest predicted beam quality, and the second beam group is a beam group with a strongest measured beam quality; or
a predicted beam group quality difference, wherein the predicted beam group quality difference is a difference between a predicted beam quality of the first beam group and a measured beam quality of the first beam group.

39. The method according to claim 38, wherein the specified event comprises at least one of: a first event, a second event, a third event, a fourth event, a fifth event or a sixth event; and receiving the second information sent by the terminal according to the beam group measurement result of the at least one beam group comprises at least one of:
receiving the first event sent by the terminal, wherein the first event is triggered in a case that the terminal determines that the beam group prediction accuracy rate is less than a first accuracy threshold according to the beam group measurement result;
receiving the second event sent by the terminal, wherein the second event is triggered in a case that the terminal determines that the beam group prediction accuracy rate is greater than a second accuracy threshold according to the beam group measurement result;
receiving the third event sent by the terminal, wherein the third event is triggered in a case that the terminal determines that the beam group quality difference is less than a first difference threshold according to the beam group measurement result;
receiving the fourth event sent by the terminal, wherein the fourth event is triggered in a case that the terminal determines that the beam group quality difference is greater than a second difference threshold according to the beam group measurement result;
receiving the fifth event sent by the terminal, wherein the fifth event is triggered in a case that the terminal determines that the predicted beam group quality difference is less than a third difference threshold according to the beam group measurement result; or
receiving the sixth event sent by the terminal, wherein the sixth event is triggered in a case that the terminal determines that the predicted beam group quality difference is greater than a fourth difference threshold according to the beam group measurement result.

40. The method according to any one of claims 35-39, wherein the first operation information is determined by the terminal according to the model output data and the measurement data corresponding to the model output data.

41. The method according to claim 40, wherein the first operation information comprises activating the first AI model or deactivating the first AI model.

42. The method according to any one of claims 33 to 41, wherein the first AI model is a model for performing spatial-domain beam prediction, and the model input data comprises at least one of:
beam qualities of N beams corresponding to the first reference signal resource set, wherein the beam quality comprises a layer 1-reference signal receiving power (L1-RSRP) or a layer 1-signal to interference plus noise ratio (L1-SINR), and N is a positive integer;
identifiers of reference signal resources corresponding to N beams corresponding to the first reference signal resource set; or
first indication information, wherein the first indication information indicates that beams contained in at least one group in group-based beam information output by the first AI model are two beams able to be simultaneously received and/or simultaneously sent by the terminal.

43. The method according to any one of claims 33 to 42, wherein the first AI model is a model for performing spatial-domain beam prediction, and the model output data comprises at least one of:
at least one group;
identifiers of two reference signal resources corresponding to each group, wherein the reference signal resource is the reference signal resource in the second reference signal resource set;
a beam quality corresponding to the identifier of each reference signal resource;
at least one third beam;
an identifier of a reference signal resource corresponding to each third beam, wherein the reference signal resource is the reference signal resource in the second reference signal resource set;
a beam quality corresponding to each third beam; or
second indication information, wherein the second indication information indicates that beams contained in at least one group in group-based beam information output by the first AI model are two beams able to be simultaneously received and/or simultaneously sent by the terminal.

44. The method according to any one of claims 33 to 41, wherein the first AI model is a model for performing time-domain beam prediction, and the model input data comprises at least one of:
at least one historical time;
beam qualities of N beams corresponding to the first reference signal resource set corresponding to each historical time, wherein the beam quality comprises an L1-RSRP or an L1-SINR, and N is a positive integer;
identifiers of reference signal resources corresponding to N beams corresponding to the first reference signal resource set corresponding to each historical time; or
third indication information, wherein the third indication information indicates that beams contained in at least one group in group-based beam information output by the first AI model are two beams able to be simultaneously received and/or simultaneously sent by the terminal.

45. The method according to any one of claims 33 to 41, wherein the first AI model is a model for performing time-domain beam prediction, and the model output data comprises at least one of:
at least one future time, wherein the at least one future time each is a time corresponding to a beam predicted by the first AI model;
at least one group corresponding to each future time;
identifiers of two reference signal resources corresponding to each group corresponding to each future time, wherein the reference signal resource is the reference signal resource in the second reference signal resource set;
a beam quality corresponding to the identifier of each reference signal resource corresponding to each future time;
at least one fourth beam corresponding to each future time;
an identifier of a reference signal resource corresponding to each fourth beam corresponding to each future time, wherein the reference signal resource is the reference signal resource in the second reference signal resource set;
a beam quality corresponding to each fourth beam corresponding to each future time; or
fourth indication information, wherein the fourth indication information indicates that beams contained in at least one group corresponding to at least one future time in group-based beam information output by the first AI model are two beams able to be simultaneously received and/or simultaneously sent by the terminal.

46. A terminal, comprising:
a transceiver module configured to receive first information sent by a network device, wherein the first information comprises configuration of a reference signal resource, and the reference signal resource is configured for the terminal to perform beam measurement; and
a processing module configured to perform the beam measurement according to the first information to obtain a beam group measurement result of at least one beam group,
wherein the processing module is further configured to send second information to the network device according to the beam group measurement result, wherein the second information comprises information related to a first artificial intelligence (AI) model, and the first AI model is a model for performing beam prediction.

47. A network device, comprising:
a transceiver module configured to send first information to a terminal, wherein the first information comprises configuration of a reference signal resource, and the reference signal resource is configured for the terminal to perform beam measurement,
wherein the transceiver module is further configured to receive second information sent by the terminal according to a beam group measurement result of at least one beam group, wherein the beam group measurement result is obtained by the terminal performing the beam measurement according to the first information, the second information comprises information related to a first artificial intelligence (AI) model, and the first AI model is a model for performing beam prediction.

48. A communication device, comprising:
one or more processors,
wherein the communication device is configured to perform the communication method according to any one of claims 1 to 23 or claims 24 to 45.

49. A storage medium, storing instructions, wherein when the instructions are executed on a communication device, the communication device is caused to perform the communication method according to any one of claims 1 to 23 or claims 24 to 45.
